# EUROPEAN PATENT APPLICATION

(11) **EP 2 316 644 A2**
(43) Date of publication of application: **04.05.2011**
(21) Application number: 10189736.1
(22) Date of filing: 02.11.2010
(51) Int. Cl.: B32B 27/08

(54) **Chlorine-free packaging sheet with tear-resistance properties**

(30) Priority: 03.11.2009 US 611880
(71) Applicant: CURWOOD, INC., Oshkosh, Wisconsin 54904 (US)
(72) Inventor: Glaser, Kevin, Oshkosh, WI 54902 (US); Mengel, Matthew, Oshkosh, WI 54901 (US); Barr, Curtis, Neenah, WI 54956 (US)
(74) Representative: Ackroyd, Robert

(57) **Abstract**

A chlorine-free packaging sheet having a first rigid component 61, a second rigid component 63 and a multilayer film 92 positioned between the first rigid component and the second rigid component, a package comprising such packaging sheet and a method of manufacturing such sheet. The packaging sheet has a normalized combined tear initiation and propagation resistance in both the machine direction and the transverse direction of less than about 0.115*lbf / mil energy to break and less than about 0.800% / mil elongation, and a normalized tear propagation resistance in both the machine direction and the transverse direction of less than about 0.300 in*lbf / mil energy to break and less than about 0.145 lbf / mil peak load.

## Description

### BACKGROUND OF THE INVENTION

This present application relates to a packaging sheet, a chlorine-free packaging sheet With tear-resistance properties.

Packaging are for many purposes. One of these many purposes includes thermoforming the into articles, such as trays, cups, etc., which the be used to package food, non-food, medical and industrial products.

One packaging sheet that is currently for thermoforming into packaging articles comprises a fully coextruded sheet with polyvinylidene chloride (PVDC) sandwiched between high impact polystyrene (HIPS), with ethylene vinyl acetate copolymer (EVA) used to laminate the central PVdC layer to the outer HIPS layers. This PVdC sheet generally has no significant sticking, forming, cutting, filling or sealing issues when used for thermoforming into articles. However, it is well known that PVDC has many environmental health concerns, with chlorines as the source of many of these concerns. Both the manufacture and the disposal of PVDC produce dioxin, a highly carcinogenic chemical; and many localities do not permit a converter or packager to reprocess or landfill-dispose of packaging materials containing PVdC. As a result, chlorine-free materials may be preferred.

A chlorine-free packaging sheet that is currently used comprises a fully coextruded sheet with ethylene vinyl alcohol copolymer (EVOH) sandwiched between HIPS, with high density polyethylene (HDPE) between the central EVOH layer and the outer HIPS layers. (See, for example, US Patent 5,972,447, published February 15, 2007, which is incorporated in its entirety in this application by this reference.) Such a sheet may have a layer structure of HIPS / HDPE / EVOH / HDPE / HIPS or HIPS / tie / HDPE / tie / EVOH /tie / HDPE / tie / HIPS (where "F is used to indicate the layer boundary). Both structures are chlorine-free. However, both structures are known to have significant forming and cutting issues when for thermoforming into articles.

What is needed is a chlorine-free packaging sheet that has no significant sticking, forming, cutting, filling or sealing issues when for thermoforming into articles.

### BRIEF SUMMARY OF THE INVENTION

This need is met by a chlorine-free packaging sheet comprising a first (rigid component, a second rigid component and a multilayer film. The multilayer film is positioned between the first rigid component and the second rigid component. The packaging sheet has a normalized combined tear initiation and propagation resistance in both the machine direction and the transverse direction of less than about 0.115 in*lbf / mil energy to break and less than about 0.800 % / mil elongation as measured in accordance with ASTM D1004, and has a normalized tear propagation resistance in both the machine direction and the transverse direction of less than about 0.300 in*lbf / mil energy to break and less than about 0.145 lbf / mil peak load as measured in accordance with ASTM D1938. Lower tear resistance values are indicative of an ease of cutting the packaging sheet. The first rigid component and the second rigid component may comprise various materials. The multilayer film may be of any number of multiple layers (i,e., two or more layers) and may comprise various materials.

In one embodiment, the multilayer film comprises a blown, coextruded film. In another embodiment, the multilayer film comprises an n-layer blown, coextruded tubular extrudate that is collapsed and flattened upon itself to form two inner tubular extrudate layers and that is thermally laminated to itself at the two inner tubular extrudate layers such that the two inner tubular extrudate layers form one inner layer and a palindromic, 2n-1 layer film results.

In further embodiments, the multilayer film comprises various barrier components, including but not limited to a barrier component comprising a single barrier layer, a barrier component comprising a first barrier layer and a second barrier layer and a barrier component comprising a first barrier component layer, a first intermediate layer, an oxygen barrier layer, a second intermediate layer and a moisture barrier layer.

In another embodiment, the multilayer film comprises an oxygen barrier material and the packaging sheet has a normalized oxygen transmission rate of less than about 0.1 cc-mil/100 in²/day as measured in accordance with ASTM D3985. In a further embodiment, the multilayer film comprises a moisture barrier material arid the packaging sheet has a normalized water vapor transmission rate of less than about 0.15 g-mil/100 in²/day as measured in accordance with ASTM F1249.

In still another embodiment, a package comprises the packaging sheet. In further embodiments, the packaging sheet may be thermoformed into various packages and contain various products.

In still yet another embodiment, various methods of manufacturing the packaging sheet are described. In general, the methods comprise the sequential steps of (a) adding thermoplastic resins to extruders to extrude an outer layer of an n-layer multilayer barrier film, to extrude a barrier component of the multilayer barrier film and to extrude an inner layer of the multilayer barrier film, such that the barrier component is positioned between the outer and the inner layer of the multilayer barrier film and such that the multilayer barrier film has a first surface and an opposing second surface; (b) heating the thermoplastic resins to form streams of melt-plastified polymers; (c) forcing the streams of melt-plastified polymers through a die having a central orifice to form a tubular extrudate having a diameter and a hollow interior; (d) expanding the diameter of the tubular extrudate by a volume of fluid entering the hollow interior via the central orifice; (e) collapsing the tubular extrudate; (f) flattening the tubular extrudate to form two inner tubular extrudate layers; (g) attaching a first rigid component to the first surface of the multilayer barrier film, and (h) attaching a second rigid component to the opposing second surface of the multilayer barrier film.

### BRIEF DESCRIPTION OF THE DRAININGS

FIG. 1 is a diagrammatic cross-sectional view of the general embodiment of the chlorine-free packaging sheet described in the present application.
FIG. 2 is a diagrammatic cross-sectional view of a first embodiment of the chlorine-free packaging sheet descried in the present application.
FIG. 3 is a diagrammatic cross-sectional view of a second embodiment of the chlorine-free packaging sheet descried in the present application.
FIG. 4 is a diagrammatic cross-sectional view of a third embodiment of the chlorine-free packaging sheet descried in the present application.
FIG. 5 is a schematic representation of a blown film process for producing a multilayer film included in the chlorine-free packaging sheet described in the present application.
FIG. 6 is a cross-sectional view of a tubular extrudate made according to the process of FIG. 5.

### DETAILED DESCRIPTION OF THE INVENTION

As used throughout this application, the term "chlorine-free" refers to polymers without chlorine within the repeating backbone (i.e., chain) of the polymer. Such polymers may contain trace amounts of residual chlorine present from a chlorine-containing catalyst (e.g., TiCl₃) used to produce the polymers. Examples of chlorine-free polymers include but are not limited to ethylene vinyl alcohol copolymer, polyamide, polyglycolic acid and acrylonitrile-methyl acrylate copolymer. Examples of non-chlorine-free polymers include but are not limited to polyvinyl chloride and polyvinylidene chloride.

As used throughout this application, the term "sheet" refers to a plastic web of any thickness and is not limited to a plastic web having a thickness of greater than about 10 mil. The term 'film" means a plastic web of any thickness and is not limited to a plastic web having a thickness of less than about 10 mil. For convenience, this application may refer to a sheet having a thickness greater than or including a film; but the terms are not limited to such interpretation.

As used throughout this application, the term "about" refers to approximately, rounded up or down to, reasonably close to, in the vicinity of, or the like. The term "approximate" is synonymous with the term "about."

As used throughout this application, the term "component" refers to a monolayer or multilayer film comprising thermoplastic resin.

As used throughout this application, the term "rigid component" refers to a component selected from the group consisting of styrenic polymer, aromatic polyester, aliphatic polyester, polypropylene homopolymer and blends of such. Examples include, but are not limited to, high impact polystyrene (HIPS), general purpose polystyrene (GPPS), styrene block copolymer (SBC) (including but not limited to styrene butadiene copolymer (SB)), polyethylene terephthalate (PET), oriented polyethylene terephthalate (OPET), amorphous polyethylene terephthalate (APET), glycol-modified polyethylene terephthalate (PETG), polylactic acid (PLA) and blends of such.

As used throughout this application, the term "multilayer" refers to a plurality of layers in a single film structure generally in the form of a sheet or web which can be made from a polymeric material or a non-polymeric material bonded together by any conventional means known in the art (i.e., coextrusion, lamination, coating or a combination of such). The chlorine-free packaging sheet described in the present application comprises a multilayer film including as many layers as desired and, preferably, at least three layers.

As used throughout this application, the term "tear-resistance properties" includes but is not limited to the combined tear initiation and propagation resistance in both the machine direction and the transverse (i.e., cross) direction of a sheet (as measured in accordance with ASTM D1004 and further explained below) and the tear propagation resistance in both the machine direction and the transverse direction of a sheet (as measured in accordance with ASTM D1938 and further explained below).

As used throughout this application, the term "polystyrene" or "PS" refers to a homopolymer or copolymer having at least one styrene monomer linkage (such as benzene (i.e., C₆H₅) having an ethylene substituent) within the repeating backbone of the polymer. The styrene linkage can be represented by the general formula: [CH₂-CH₂ (C₆H₅)]ₙ. Polystyrene may be formed by any method known to those skilled in the art.

As used throughout this application, the term "coextruded" refers to the process of extruding two or more polymer materials through a single die with two or more orifices arranged so that the extrudates merge and weld together into a laminar structure before chilling (i.e., quenching.) Coextrusion methods known to a person of ordinary skill in the art include but are not limited to blown film coextrusion, slot cast coextrusion and extrusion coating. The flat die or slot cast process includes extruding polymer streams through a flat or slot die onto a chilled roll and subsequently winding the film onto a core to form a roll of film for further processing.

As used throughout this application, the term "blown film" refers to a film produced by the blown coextrusion process. In the blown coextrusion process, streams of melt-plastified polymers are through an annular die having a central mandrel to form a tubular The tubular extrudate be expanded to a desired wall thickness by a volume of fluid (e.g., air or other gas) entering the hollow interior of the extrudate via the mandrel, and then rapidly cooled or quenched by any of various methods known to those of skill in the art.

As used throughout this application, the term "layer" refers to a discrete film or sheet component which is coextensive with the film or sheet and has a substantially uniform composition. In a monolayer film, "film," "sheet" and "layer" would be synonymous.

As used throughout this application, the term "barrier" refers to any material which controls a permeable of the film or sheet and includes but is not limited to oxygen barrier, moisture barrier, chemical barrier, heat barrier and odor barrier,

As used throughout this application, the term "tie material" refers to a polymeric material serving a primary purpose or function of adhering two surfaces to one another, presumably the planar surfaces of two film layers. A tie material adheres one film layer surface to another film layer surface or one area of a film layer surface to another area of the same film layer surface. The tie material may any polymer, copolymer or of polymers having a polar group or any other polymer, homopolymer, copolymer or blend of polymers, including modified and unmodified polymers (such as grafted copolymers), which provide sufficient interlayer adhesion to adjacent layers comprising otherwise nonadhering polymers.

As used throughout this application, the term "polyester" refers to a homopolymer or copolymer having an ester linkage between monomer units which may be formed, for example, by condensation polymerization reactions between a dicarboxylic acid and a diol. The ester linkage can be represented by the general formula: [O-R-OC(O)-R'-C(O)]ₙ where R and R' are the same or different alkyl (or aryl) group and may be generally formed from the polymerization of dicarboxylic acid and diol monomers containing both carboxylic acid and hydroxyl moieties. The dicarboxylic acid (including the carboxylic acid moieties) may be linear or aliphatic (e.g., lactic acid, oxalic acid, maleic acid, succinic acid, glutaric acid, adipic acid, pimelic acid, suberic acid, azelaic acid, sebacic acid, and the like) or may be aromatic or alkyl substituted aromatic (e.g., various isomers of phthalic acid, as acid (or terephthalic acid), isophthalic and naphthalic acid). Specific examples of a useful diol include but are not limited to ethylene glycol, propylene glycol, trimethylene glycol, 1,4-butane diol, neopentyl glycol, cyclohexane diol and the like. Polyesters may include a homopolymer or copolymer of alkyl-aromatic esters including but not limited to polyethylene terephthalate (PET), amorphous polyethylene terephthalate (APET), crystalline polyethylene terephthalate (CPET), glycol-modified polyethylene terephthalate (PETG) and polybutylene terephthalate; a copolymer of terephthalate and isophthalate including but not limited to polyethylene terephthalate/isophthalate copolymer; a homopolymer or copolymer of aliphatic esters including but not limited to polylactic acid (PLA); polyhydroxyalkonates including but not limited to polyhydroxypropionate, poly(3-hydroxybutyrate) (PH3B), poly(3-hydroxyvalerate) (PH3V), poly(4-hydroxybutyrate) (PH4B), poly(4-hydroxyvalerate) (PH4V), poly(5-hydroxyvaterate) (PH5V), poly(6-hydroxydodecanoate) and blends of any of these materials.

As used throughout this application, the term "anchor coat material" refers to a material that is placed between one layer and an adjacent layer to anchor one layer to another layer. It may also be referred to as an "undercoat material."

As used throughout this application, the term "polyethylene" or "PE" refers (unless indicated otherwise) to ethylene homopolymers as well as copolymers of ethylene with at least one alpha-olefin. The term will be used without regard to the presence or absence of substituent branch groups.

As used throughout this application, the term "high density polyethylene" or "HDPE" refers to both (a) homopolymers of ethylene which have densities from about 0.960 g/cm³ to about 0.970 g/cm³ and (b) copolymers of ethylene and an alpha-olefin (usually 1-butene or 1-hexene) which have densities from about 0.940 g/cm³ to about 0.958 g/cm³. HDPE includes polymers made with Ziegler or Phillips type catalysts and polymers made with single-site metallocene catalysts. HDPE also includes high molecular weight "polyethylenes." In contrast to HDPE, whose polymer chain has some branching, are "ultra high molecular weight polyethylenes," which are essentially unbranched specialty polymers having a much higher molecular weight than the high molecular weight HDPE.

As used throughout this application, the term "low density polyethylene" or "LDPE" refers to branched homopolymers having densities between 0.915 g/cm³ and 0.930 g/cm³, as well as copolymers containing polar groups resulting from copolymerization as with vinyl acetate or ethyl acrylate). LDPE typically contains long branches off the main chain (often termed "backbone") with alkyl substituents of two to eight carbon atoms.

As used throughout this application, the term "copolymer" refers to a polymer product obtained by the polymerization reaction or copolymerization of at least two monomer species. Copolymers may also be referred to as bipolymers. The term "copolymer" is also inclusive of the polymerization reaction of three, four or more monomer species having reaction products referred to terpolymers, quaterpolymers, etc.

As used throughout this application, the term "copolymer of ethylene and at least one alpha-olefin" refers to a modified or unmodified copolymer produced by the co-polymerization of ethylene and any one or more alpha-olefins. Suitable alpha-olefins include, for example, C₃ to C₂₀ alpha-olefins such as propene, 1-butene, 1-pentene, 1-hexene, 1-octene, 1-decene and combinations of such. The co-polymerization of ethylene and an alpha-olefin may be produced by heterogeneous catalysis, such as co-polymerization reactions with Ziegler-Natta catalysis systems, including, for example, metal halides activated by an organometallic catalyst (e.g., titanium chloride) and optionally containing magnesium chloride complexed to trialkyl aluminum. Heterogeneous catalyzed copolymers of ethylene and an alpha-olefin may include linear low density polyethylene (LLDPE), very low density polyethylene (VLDPE) and ultra low density polyethylene (ULDPE) (commercially available as, for example, Dowlex™ The Dow Chemical Company (Midland, Michigan)). Additionally, the co-polymerization of ethylene and an alpha-olefin may also be produced by homogeneous catalysis, such as co-polymerization reactions with metallocene catalysis systems which include constrained geometry catalysts, (e.g., monocyclopentadienyl transition-metal complexes), Homogeneous catalyzed copolymer of and alpha-olefin may include modified or unmodified ethylene alpha-olefin copolymers haying a long-chain branched (i.e., 8-20 pendant carbons atoms) alpha-olefin co-monomer (commercially available as, for example, Affiniti™ and Attane™ from The Dow Chemical Company (Midland, Michigan)), linear copolymers (commercially available as, for example, Tafmer™ from the Mitsui Petrochemical Corporaton (Tokyo, Japan)), and modified or unmodified ethylene alpha-olefin copolymers having a short-chain branched (i.e., 3-6 pendant carbons atoms) alpha-olefin co-monomer (commercially available as, for example, Exact™ from ExxonMobil Chemical Company (Houston, Texas)). In general, homogeneous catalyzed ethylene alpha-olefin copolymers may be characterized by one or more methods known to those of skill in the art, including but not limited to molecular weight distribution (M_{w}/Mₙ), composition distribution breadth index (CDBI), narrow melting point and single melting point behavior.

As used throughout this the term "modified" refers to a chemical derivative, such as one having any form of anhydride functonality (e.g., anhydride of maleic acid, crotonic acid, citraconic acid, itaconic acid, fumaric acid, etc.), whether grafted a polymer, copolymerized with a or blended with one or more polymers. The term is also inclusive of derivatives of such functionalities, such as acids, esters and metal salts derived from such.

As used throughout this the term "nucleating agent" refers to an additive which forms nuclei in a polymer to promote the growth of crystals,

As used this application, the term "hydrocarbon resin" refers to a product produced by polymerization from coal tar, petroleum and turpentine feedstocks, as defined by ISO Standard 472, "plastics - Vocabulary," which is incorporated in its in this application by this reference.

As used throughout this the term "intermediate layer" refers to a layer that is positioned between two other layers.

As used throughout this application, the term "ethylene vinyl alcohol copolymer" or "EVOH" refers to copolymers comprised of repeating units of ethylene and vinyl alcohol. Ethylene vinyl alcohol copolymers can be represented by the general formula: [(CH₂-CH₂)ₘ-(CH₂-CH(OH))]ₙ. Ethylene vinyl alcohol copolymers may include saponified or hydrolyzed ethylene vinyl acrylate copolymers. EVOH to a vinyl alcohol copolymer having an ethylene co-monomer and prepared by, for example, hydrolysis of vinyl acrylate copolymers or by chemical reactions with vinyl alcohol. The degree of hydrolysis is preferably at least 50% and, more preferably, at least 85%. Preferably, ethylene vinyl alcohol copolymers comprise from about 28 mole percent no about 48 mole percent ethylene, more preferably, from about 32 mole percent to about 44 mole percent ethylene, and, even more preferably, from about 38 mole percent no about 44 mole percent ethylene.

As used throughout this application, the term "polyamide" or "PA" or "nylon" refers to a homopolymer or copolymer having an amide linkage between monomer units which may be formed by any method known to those skilled in the art. The amide linkage can be represented by the general formula: [C(O)-R-O(O)-NH-R'-NH]ₙ where R and R' are the same or different alkyl (or aryl) group. Examples of nylon polymers include but are not limited to nylon 6 (polycaprolactam), nylon 11 (polyundecanolactam), nylon 12 (polyauryllactam), nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene doderanediamide), nylon 7,7 (polyheptametylene pimelamide), nylon 8,8 (polyoctamethylene suberamide), nylon 9,9 (polynonamethylene azelaiamide), nylon 10,9 (polydecamethylene azelamide), and nylon 12,12 (polydodecamethylene dodecanediamide). Examples of nylon copolymers include but are not limited to nylon 6,6/6 copolymer (polyhexamethylene adipamide/caprolactam copolymer), nylon 6,6/9 copolymer (polyhexamethylene adipamide/azelaiamide copolymer), nylon 6/6,6 copolymer (polycaprolactam/hexamethylene adipamide copolymer), nylon 6,216,2 copolymer (polyhexamethylene ethylenediamide/hexamethylene ethylenediamide copolymer), and nylon 6,6/6,9/6 copolymer (polyhexamethylene adipamide/hexamethylene azelaiamide/caprolactam copolymer), Examples of aromatic nylon polymers include but are not limited to nylon 4,I, nylon 6,I nylon 6,6/6I copolymer, nylon 6,6/6T copolymer, nylon MXD6 (poly-m-xylylene adipamide), poly-p-xylylene adipamide, nylon 6I/6T copolymer, nylon 6T/6I copolymer, nylon MXDI, nylon 6/MXDT/I copolymer, nylon 6T (polyhexamethylene terephthalamide), nylon 12T (polydodecamethylene terephthalamide), nylon 66T, and nylon 6-3-T (poly(trimethyl hexamethylene terephthalamide).

As used throughout this application, the term "ionomer" refers to a partially neutralized acid copolymer.

As used throughout this application, the term "polypropylene" or "PP" refers to a homopolymer or copolymer having at least one propylene monomer linkage within the repeating backbone of the polymer. The propylene linkage can be represented by the general formula: [CH₂-CH(CH₃)]ₙ.

As used throughout this application, the term "palindromic film" refers to a multilayer film, the layers of which are substantially symmetrical. Examples of palindromic films are film or sheet having the layer configurations A/B/A or A/B/B/A or A/B/C/B/A or A/B/C/D/E/D/C/F/C/D/E/D/C/B/A, etc. An example of a layer configuration of a non-palindromic film would be A/B/C/A.

As used throughout this application, the term "thermoformed" refers to polymer film or sheet permanently formed into a desired shape by the application of a differential pressure between the film or sheet and a mold, by the application of heat, by the combination of heat and the application of a differential pressure between the film or sheet and a mold, or by any thermoforming technique to those skilled in the art

As used throughout this application, the term "thermoplastic" refers to a polymer or polymer that softens when exposed to heat and then returns to its original condition when cooled to room temperature. In general, thermoplastic materials may include natural or synthetic polymers, Thermoplastic materials may further include any polymer that is cross-linked by either radiation or chemical reaction during manufacturing or post-manufacturing processes.

As used throughout this application, the term "polymer" refers to a material which is the product of a polymerization or copolymerization reaction of natural, synthetic or combined natural and synthetic monomers and/or co-monomers and is inclusive of homopolymers, copolymers, terpolymers, etc. In general, the layers of the chlorine-free packaging sheet described in the present application may comprise a single polymer, a mixture of a single polymer and non-polymeric material, a combination of two or more polymers blended together, or a mixture of a blend of two or more polymers and non-polymeric material. It will be noted that many polymers may be synthesized by the mutual reaction of complementary monomers. It will also be noted that some polymers are obtained by the chemical modification of other polymers such that the structure of the macromolecules that constitute the resulting polymer can be thought of as having been formed by the homopolymerization of a hypothetical monomer.

As used throughout this application, the term "polyvinylidene chloride" or "PVDC" refers to a polymer derived from vinylidene chloride, PVDC may be formed from the polymerization of vinylide chloride with various monomers including but not limited no acrylic esters and unsaturated carboxyl groups.

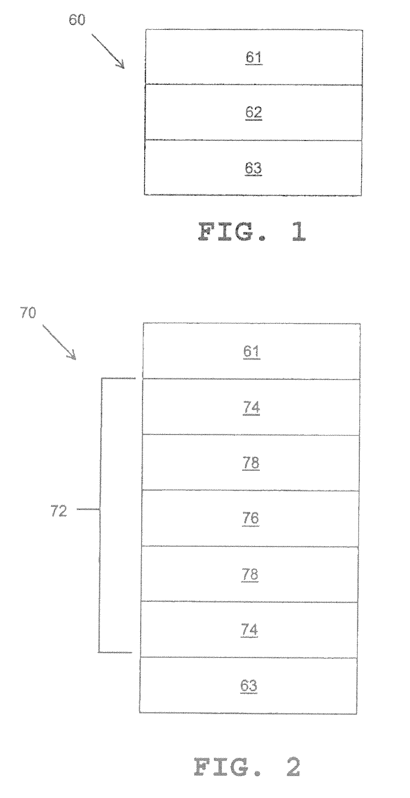

Referring now to the drawings, FIG. 1 is a diagrammatic cross-sectional view of the general embodiment of the chlorine-free packaging sheet described in the present application. Generic packaging sheet 60 comprises three layers: first rigid component 61, generic multilayer film 62 and second rigid component 63. (In each of the figures of the present application, the dimensions are not to scale and may be exaggerated for clarity.)

First rigid component 61 and second rigid component 63 may comprise the same material or or may comprise different materials (relative to each other). First rigid component 61 and second rigid component 63 comprise styrenic polymer, aromatic polyester, aliphatic polyester, polypropylene homopolymer, or blends of such.

Examples of styrenic polymers include but are not limited to high impact polystyrene (HIPS), general purpose polystyrene (GPPS) and styrene block copolymer (SBC). HIPS is sometimes called rubber-modified and is normally produced by copolymerization of styrene and a synthetic rubber. (See Wagner, et al., "Polystyrene," The Wiley Encyclopedia of Packaging Technology, Second Edition, 1997, pp. 768.771 (John Wiley & Sons, Inc., New York, New York), which is incorporated in its entirety in this application by this reference.) of HIPS include but are not limited to Impact Polystyrene 825E and Impact Polystyrene 945E, both of which are available from Total Petrochemicals USA, Inc; EB6025 Rubber Modified High Impact Polystyrene, which is available from Chevron Phillips Company (The Woodlands, Texas); and 6210 High Impact Polystyrene, which is available from Ineos Nova LLC (Channahon, Illinois). GPPS is often called crystal polystyrene, as a reference to the clarity of the resin. Examples of GPPS include but are not limited to Crystal Polystrene 5248 and Crystal Polystyrene 525B, both of are available from Total Petrochemicals USA, Inc. Styrene block copolymers (SBC) include styrene butadiene copolymers (SB). The styrene-butadiene copolymers are for packaging applications are those resinous block copolymers that typically contain a greater proportion of styrene than butadiene and that are predominantly polymodal with respect to molecular weight distribution. (See Hartsock, "Styrene-Butadiene Copolymers," The Wiley Encyclopedia of Packaging Technology, Second Edition, 1997, pp. 863-864 (John Wiley & Sons, Inc., New York, New York), which is incorporated in its entirety in this application by this reference.) A non-limiting example of SB is DK13 K-Resin® Styrene-Butadiene Copolymer, which is available from Chevron Phillips Chemical Company (The Woodlands, Texas).

Examples of aromatic polyesters but are not to polyethylene terephthalate (PET), oriented polyethylene terephthalate (OPET), amorphous polyethylene terephthalate (APET) and glycol-modified polyethylene terephthalate (PETG). A non-limiting example of APET is Eastman™ PET 9921, which is available from Eastman Chemical Company (Kingsport, Tennessee). A non-limiting example of PETG is Eastar™ Copolyester 6762, which is also available from Eastman Chemical Company (Kingsport, Tennessee). An example of an aliphatic polyester includes but is not limited to polylactic acid (PLA).

Examples of polypropylene homopolymer include but are not limited to those polyproplylene homopolymers traditionally used to to cast sheets. Non-limiting examples of such polypropylenes include Polypropylene 3287WZ, which is available from Total Petrochemicals USA, Inc. (Houston, Texas); and H02C-00 Polypropylene Homopolymer, which is available from Ineos Olefins & Polymers USA (League City, Texas).

More specifically, first rigid component 61 and second rigid component 63 may each comprise HIPS, APET, PETG, a blend of GPPS and SB, a blend of HIPS and GPPS, a blend of HIPS, GPPS and SB, a blend or APET and SB, or blends of such.

First rigid component 61 and second rigid component 63 may each also comprise processing aids and/or color concentrates. Examples of processing aids include but are not limited to slip/antiblock concentrates, such as SKR 17 available from Chevron Phillips Corporation (The Woodlands, Texas); release agents, such as SF18-350 Polydimethylsiloxane Fluid available from DC Products Pty Ltd (Mt. Waverley, Victoria, Australia); and slip agents, such as Incromax™ PS available from Croda Polymer Additives (Cowick, United Kingdom). Examples of color concentrates include but are not limited to Accel A1447756CP1 White Color Concentrate and Accel A19111S4CP1 Blue Color Concentrate, both of which are available from Accel Corporation (Naperville, Illinois).

Returning to FIG. 1, as described above, generic packaging sheet 60 also comprises generic multilayer film 62. FIG. 1 shows the general embodiment of the packaging sheet 60 described in the present application, As such, generic multilayer film 62 may be a three-layer, four-layer, five-layer, seven-layer, nine-layer, thirteen-layer or any other multilayer film (i.e., film having two or more layers), provided that the resulting generic packaging sheet 60 has a normalized combined tear initiation and propagation resistance in both the machine direction and the transverse direction of less than about 0.115 in*lbf / mil energy to break and less than about 0.800 % / mil elongation and has a normalized tear propagation resistance in both the machine direction and the transverse direction of less than about 0.300 in*lbf / mil energy to break and less than about 0.145 lbf / mil peak load (as further defined and described in the EXAMPLES below). Embodiments of a chlorine-free packaging sheet comprising a five-layer film, a nine-layer film and a thirteen-layer film are shown in FIGS 2, 3 and 4, respectively. Generic multilayer film 62 may be a blown, coextruded film.

Referring to FIG. 2, FIG. 2 is a diagrammatic cross-sectional view of a first embodiment of the chlorine-free packaging sheet described in the present application. First packaging sheet 70 comprises first rigid component 61, first multilayer film 72 and second rigid component 63. First rigid component 61 and second rigid component 63 are as described above.

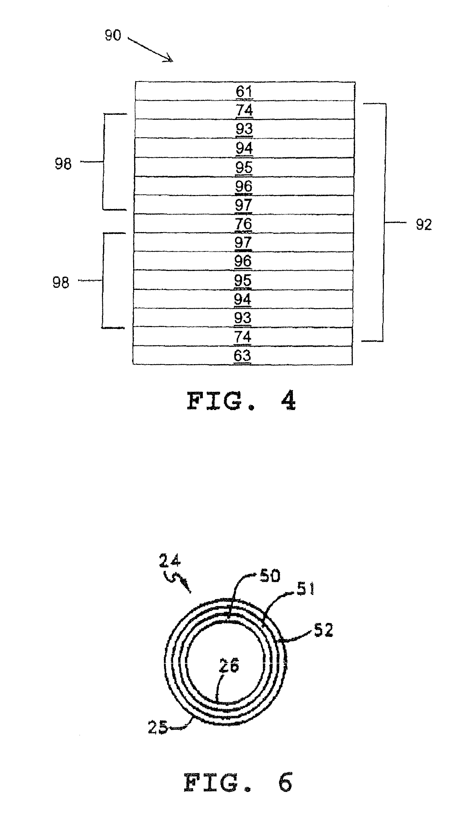

First multilayer film 72 comprises outer layer 74, first barrier component 78 and inner layer 76. In FIG. 2, first multilayer film 72 is shown as a five-layer palindromic film, resulting from a blown, coextruded three-layer tubular extrudate that is collapsed and flattened upon itself to form two inner tubular extrudate layers 50 (see FIG. 6) and that is thermally laminated to itself at the two inner tubular extrudate layers 50 to form one inner layer 76.

Outer layer 74 may comprise styrenic copolymer, tie material, polyester anchor coat material, copolymer of ethylene and an ester, copolymer of ethylene and at least one alpha olefin, or polypropylene copolymer,

Outer layer 74 may comprise styrenic copolymer when first rigid component, 61 and/or second rigid component 63 comprise styrenic copolymer. Styrenic copolymers are as described above. As described above, a non-limiting example of a styrenic copolymer is to DK13 K-Resin® Styrene-Butadiene Copolymers, which is available from Chevron Phillips Chemical Company (The Woodlands, Texas).

Outer layer 74 may comprise tie material when first rigid component 61 and/or second rigid component 63 comprise aliphatic polyester. Tie material includes but is not limited to glycidyl methacrylate-modified copolymers of ethylene (e.g., epoxy-functional tie materials), anhydride-modified (such as maleic anhydride modified) copolymers of ethylene, copolymers of ethylene and a carboxylic acid (such as an acrylic acid), copolymers of ethylene and an ester (such as an acrylate), and blends of such. Further examples of tie material are provided below.

Outer layer 74 may comprise polyester anchor coat material when first rigid component 61 and/or second rigid component 63 comprise aromatic polyester. Polyester anchor coat materials may be polyethylene-based and are known in the art.

Outer layer 74 may comprise copolymer of ethylene and an ester when first rigid component 61 and/or second rigid component 63 comprise polypropylene homopolymer. Examples of copolymers of ethylene and an ester include but are not limited to ethylene vinyl acetate copolymer (EVA). Non-limiting examples of EVA are described below.

Outer layer 74 may comprise copolymer of ethylene and at least one alpha olefin when first rigid component and/or second rigid component 63 comprise polypropylene homopolymer. Examples of copolymers of ethylene and at least one alpha olefin include but are not limited to linear low density polyethylene and plastomers. Specific non-limiting examples of such ethylene copolymers are Dowlex™ 2045 Polyethylene Resin available from The Dow Chemical Company (Midland, Michigan) and Exact™ Plastomers (various grades) available from ExxonMobil Chemical Company (Houston, Texas). Copolymers of ethylene and at least one alpha olefin are further described below.

Outer layer 74 may comprise polypropylene copolymer when first rigid component 61 and/or second rigid component 63 comprise polypropylene homopolymer. Polypropylene copolymers include but are not limited to impact copolymers, such as Propylene 4170 available from Total Petrochemicals USA, Inc. (Houston, Texas).

Outer layer 74 may also comprise processing aids. Examples of processing aids include but are not limited to slip/antiblock concentrates, such as SKR 17 available from Chevron Phillips Corporation (The Woodlands, Texas); and thermal stabilizers, such as SKR 20 available from Chevron Phillips Corporation (The Woodlands, Texas).

For a palindromic film, inner layer 76 may comprise any material that is capable of thermally laminating or heat sealing to itself. Examples of materials for inner layer 76 include but are not limited to high density polyethylene, low density polyethylene, copolymers of ethylene and at least one alpha-olefin, copolymers of ethylene and an ester, anhydride-modified copolymers of ethylene, copolymers of ethylene and a carboxylic acid, ionomers, styrenic copolymers, pressure sensitive adhesives, polypropylene copolymers or blends of such.

Examples of high density polyethylene (HDPE) include but are not limited no HDPE as described below.

Examples of copolymers of ethylene and at least one alpha-olefin include but are not limited to butene LLDPE, such as ExxonMobil™ LLDPE LL1001.32 available from ExxonMobil Chemical Company (Houston, Texas); Dow LLDPE DFDA-7047 NT 7 available from the Dow Chemical Company (Midland, Michigan), Novapo® PF-0118-F available from Nova Chemicals Corporation (Calgary, Alberta, Canada); Sabic® LLDPE 118N available from Sabic Europe (Sittard, The Netherlands); and Exact™ Plastomers available from ExxonMobil Chemical Corporation (Houston, Texas).

Examples of copolymers of ethylene and an ester include but are not limited no ethylene vinyl acetate copolymer (EVA), ethylene methyl methacrylate copolymer, ethylene ethyl methacrylate copolymer and ethylene alkyl acrylates such as ethylene methyl acrylate, ethylene ethyl acrylate and ethylene butyl acrylate. Non-limiting examples of EVA include Escorene™ Ultra LD 705.MJ available from ExxonMobil Chemical Company (Houston, Texas), Escorene™ Ultra LD 768,MJ available from ExxonMobil Chemical Company (Houston, and Ateva® 2861AU available from Celanese Corporation (Edmonton, Alberta, Canada).

Examples of anhydride-modified copolymers of ethylene include are but not limited to tie materials as described above and below.

Examples of copolymers of ethylene and a carboxylic acid include but are not limited to ethylene-methecrylic acid (EMAA) and ethylene acrylic acid (EAA).

A non-limiting example of ionomers (i.e., partially neutralized acid copolymers) is Surlyn® available from E. I. du Pont de Nemours and Company (Wilmington. Delaware).

Examples of styrenic copolymers are as described above.

Examples of pressure sensitive adhesives (PSA) include but are not limited no those compositions that comprises a base elastomeric resin and a tackifier to enhance the ability of the adhesive to instantly bond and to enhance the bond strength, Examples of elastomers used as the base resin in tackified multicomponent PSA include but are not limited to natural rubber, polybutadiene, polyorganosiloxanes, styrene-butadiene rubber, carboyxlated styrene-butadiene rubber, polyisobutylene, butyl rubber, halogenated butyl rubber, block polymers based on styrene with isoprene, butadiene, ethylene-propylene or ethylene-butylene, or combinations of such elastomers. (See Yorkgitis, "Adhesive Compounds," Encyclopedia of Polymer Science and Technology, Third Edition, 2003, Volume 1, pp. 256-290 (John Wiley & Sons, Inc., Hoboken, New Jersey), which is incorporated in its entirety in this application by this reference.) A non-limiting specific example of a PSA is an adhesive comprising a block copolymer of styrene and elastomer having a density of 0.96 g/cm³ and available as M3156 from Bostik Findley, Inc. (Wauwatosa, Wisconsin).

Examples of polypropylene copolymers include but are not limited to propylene, ethylene and/or butene copolymers. A non-limiting specific example of such copolymers is Versify™ Plastomers and Elastomers (various grades) available from The Dow Chemical Company (Midland, Michigan).

Inner layer 76 may comprise a blend of any of the above materials. As a non-limiting example, this blend may be a blend of copolymers of ethylene and an ester and copolymer of ethylene and at least one alpha olefin. As a further non-limiting example, this blend may be a blend of EVA and LLDPE. As an even further non-limiting example, this blend may be a blend of Escorene™ Ultra LD 768.MJ and ExxonMobilT™ LLDPE LL1001.32.

Inner layer 76 may also comprise processing aids. Examples of processing aids include but are not limited to antiblock additives, such as Ampacet® 10853 available from Ampacet Corporation (Tarrytown, New York).

Returning to FIG. 2, as described above, first multilayer film 72 of first parkaging sheet 70 also comprises first barrier component 78. In this embodiment, first barrier component 78 comprises a single layer, which may be a barrier layer comprising high density polyethylene (HDPE), low density polyethylene (LDPE), copolymer of ethylene and at least one alpha olefin, or blends of such.

LDPE and copolymer of ethylene and at least one alpha olefin is each described above; HDPE is also described above. HDPE may be further described as a semicrystalline polymer. It is a homopolymer when the density is ≥ 0.960 g/cm3 and a copolymer when the density is below this value. HDPE is available in a wide range of molecular weights as determined by either melt index (MI) or HLMI (high-load melt index). (See Carter, "Polyethylene, High-Density," The Wiley Encyclopedia of Packaging Technology, Second Edition, 1997, pp. 745-748 (John Wiley & Sons, Inc., New York, New York), which is incorporated in its entirety in this application by this reference.) Specific non-limiting examples of HDPE include Alathon® M6020 available from Equistar Chemicals LP (Houston, Texas); Alathon® L5885 available from Equistar Chemicals LP (Houston, Texas); ExxonMobil™ HDPE HD 7925-30 available from ExxonMobil Chemical Company (Houston, Texas); ExxonMobil™ HDPE HD 7845.30 available from ExxonMobil Chemical Company (Houston, and Suvass® HPs167 available from Nova Chemicals Corporation (Calgary, Alberta, Canada

First barrier component 78 may also comprise tie material. As described above, tie material includes but is not limited to glycidyl methacrylate-modified copolymers of ethylene (e.g., epoxy-functional tie materials), anhydride-modified (such as maleic anhydride modified) copolymers of ethylene, copolymers of ethylene and a carboxylic acid (such as an acrylic acid), copolymers of ethylene and an ester (such as an acrylate), and blends of such, Specific non-limiting examples of tie material include Lotader® AX 8900 available from Arkema Inc. (Philadelphia, Pennsylvania); GT4157 available from Westlake Chemical Corporation (Houston, Texas); DuPont™ Bynel^{®} 41E710 available from E.I. du Pont de Nemours and Company, Inc. (Wilmington, Delaware); DuPont™ Bynel® 41E687 available from E.I. du Pont de Nemours and Company, Inc. (Wilmington, Delaware); Plexar® PX 3084 available from Equistar Chemicals LP (Houston, Texas); Admer™ AT2118A available from Mitsui Chemicals America, Inc. (Rye Brook, New York); DuPont™ Bynel® 40E529 available from E.I. du Pont de Nemours and Company, Inc. (Wilmington, Delaware); DuPont™ Bynel® 4164 available from E.I. du Pont de Nemours and Company, Inc. (Wilmington, Delaware); Plexar® PX 3080 available from Equistar Chemicals LP (Houston, Texas); and Lotader® 2210 available from Arkema Inc. (Philadelphia, Pennsylvania).

First barrier component 78 may also comprise a nucleating agent, a hydrocarbon resin or blends of *such.

In embodiments of the chlorine-free packaging sheet in which the barrier component comprises HDPE blended with nucleating agent, the HDPE may have a medium molecular weight, a melt index within the range of about 0.5 to about 50 dg/min, a density greater than or equal to about 0.941 g/cm³, a long chain branching index or less than or equal to about 0.5 and a melt flow ratio less than or equal to about 65. (See US Patent Application 2007/0036960, published February 15, 2007, which is incorporated in its entirety in this application by this reference.)

A nucleating agent may comprise of those nucleating agents disclosed in US Patent 6,969,556, issued November 29, 2005, which is incorporated in its entirety in this by this reference. More specifically, as a non-limiting example, the nucleating agent may comprise glycerol alkoxide salts, hexahydrophthalic acid salts, similar salts or mixtures of such salts, as disclosed in US Patent Application 2008/0227900, published September 18, 2008, and in US Patent Application 2007/0036960, published February 15, 2007, both are which are incorporated in their entireties in this application by this reference, Such salts include ammonium and metal salts, including but not limited to zinc, magnesium, calcium and mixtures of such metals. An example of a zinc glycerolate nucleating agent is Irgastab® 287 available from Ciba Specialty Chemicals Holding, Inc. (Basel, Switzedand). An example of a calcium hexahydrophthalate is Hyperform® HPN-20E available from Milliken & Company (Spartanburg, South Carolina). Calcium hexahydrophthalate is also available blended with LDPE as Polybatch® CLR122 available from A. Schulman Inc. (Akron, Ohio). The nucleating agent may be included in barrier component layer (or layers) in an amount from about 0.002% to about 0.2% by weight (of the layer) or from about 0,02% to about 0.12% by weight.

A hydrocarbon resin may comprise any of those hydrocarbon resins disclosed in US Patent 6,432,496, issued August 13, 2002, or in US Patent Application 2008/0286457, published November 20, 2008, both of are incorporated in their entireties in this application by this reference. More specifically, as a non-limilting example, the hydrocarbon resin may include petroleum resins, terpene resins, styrene resins, cyclopentadiene resins, saturated alicyclic resins or mixtures of such resins. Additionally, as a non-limiting example, the hydrocarbon resin may comprise hydrocarbon resin derived from the polymerization of olefin feeds rich in dicyclopentadiene (DCPD), from the polymerization of olefin feeds produced in the petroleum cracking process (such as crude C₉ feed streams), from the polymerization of pure monomers (such as styrene, α-methylstyrene, 4-methylstyrene, vinyltoluene or any combination of these or similar pure monomer feedstocks), from the polymerization of terpene olefins (such as α-pinene, β-pinene or d-limonene) or from a combination of such. The hydrocarbon resin may be fully or partially hydrogenated. Specific examples of hydrocarbon resins include but are not limited to Plastolyn® R1140 Hydrocarbon Resin available from Eastman Chemical Company (Kingsport, Tennessee), Arkon® P-140 available from Arakawa Chemical Industries, Limited (Osaka, Japan) and Piccolyte® S135 Polyterpene Resins available from Hercules Incorporated (Wilmington, Delaware). The hydrocarbon resin may be included in barrier component layer (or layers) in an amount from about 5% to about 30% by weight (of the layer) or from about 10% to about 20% by weight.

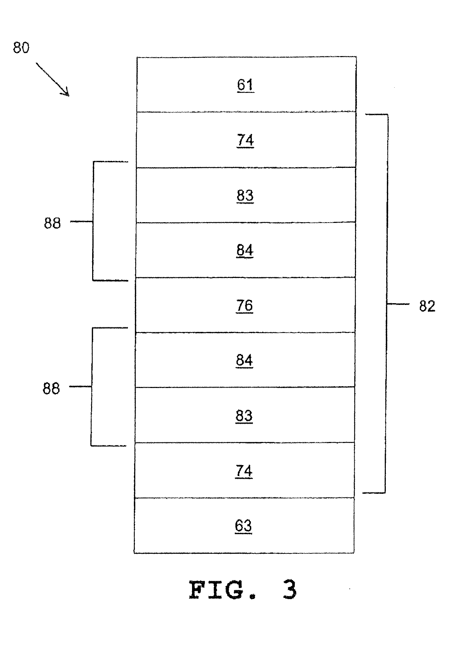

FIG. 3 is a diagrammatic cross-sectional view of a second embodiment of the chlorine-free packaging sheet described the present application. Second packaging sheet 80 comprises first rigid component 61, second multilayer film 82 and second rigid component 63. First rigid component 61 and second rigid component 63 are as described above.

Second multilayer film 82 comprises outer layer 74, second barrier component 88 and inner layer 76. In FIG. 3, second multilayer film 82 is shown as a seven-layer palindromic film, resulting from a blown, coextruded four-layer tubular extrudate that is collapsed and flattened upon itself to form two inner tubular extrudate layers 50 (see FIG. 6) and is thermally laminated to itself at the two inner tubular extrudate layers 50 to form one inner layer 76. Outer layer 74 and inner layer 76 are as described above.

Second barrier component 88 comprises two layers: first barrier layer 83 and second barrier layer 84. First barrier layer 83 and second barrier layer 84 may each comprise HDPE, LDPE, copolymer of ethylene and at least one alpha olefin, or blends of such; each of these materials is as described above. First barrier layer 83 may also comprise tie material; this tie material is as described above. Furthermore, first barrier layer 83 may also comprise nucleating agent, hydrocarbon resin or blends of such; each of these materials is as described above.

FIG. 4 is a diagrammatic cross-sectional view of a third embodiment of the chlorine-free packaging sheet described in the present application. Third packaging sheet 90 comprises first rigid component 61, third multilayer film 92 and second rigid component 63. First rigid component 61 and second rigid component 63 are as described above.

Third multilayer film 92 comprises outer layer 74, third barrier component 98 and inner layer 76. In FIG. 4, third multilayer film 92 is shown as a thirteen-layer palindromic film, resulting from a blown, coextruded seven-layer tubular extrudate that is collapsed and flattened upon itself to form two inner tubular extrudate layers 50 (see FIG. 6) and that is thermally laminated to itself at the two inner tubular extrudate layers 50 to form one inner layer 76. Outer layer 74 and inner layer 76 are as described above.

Third barrier component 98 comprises five layers: first barrier component layer 93, first intermediate layer 94, oxygen barrier layer 95, second intermediate layer 96 and moisture barrier layer 97.

In one embodiment of third packaging sheet 90, first barrier component layer 93 may comprise HDPE, LDPE, copolymer of ethylene and at least one alpha olefin, or blends of such; each of these materials is as described above. First barrier component layer 93 may also comprise tie material; this tie material is as described above. Furthermore, first barrier component layer 93 may also comprise nucleating agent, hydrocarbon resin or blends of such; each of these materials is as described above. As such, in one embodiment of third packaging sheet 90, first barrier component layer 93 may comprise a blend of HOPE, tie material and nucleating agent.

In another embodiment of third packaging sheet 90, first barrier component layer 93 may comprise a copolymer of ethylene and an ester. Copolymers of ethylene and an ester are as described above. As described above, a non-limiting example of a of ethylene and an ester is EVA. As described above, one non-limiting example of EVA is Escorene™ Ultra LD 705.MJ available from ExxonMobil Chemical Company (Houston, Texas).

First intermediate layer 94 may comprise tie material or polyamide. Tie material is as described above. Polyamide (which is further described above) may be included for clarity, thermoformability, high strength and toughness over a broad temperature range, chemical resistance and/or barrier properties. (See "Nylon," The Wiley Encyclopedia of Packaging Technology, Second Edition, 1997, pp. 681-686 (John Wiley & Sons, Inc., New York, New York), which is incorporated in its entirety in this application by this reference.) Specific, non-limiting examples of polyamide include UBE Nylon 5033 B available from UBE Engineering Plastics, S.A. (Castellón, Spain); Ultramid® C40 L 01 available from BASF Corporation (Florham Park, New Jersey); Ultramid® C33 01 available from BASF Corporation (Florham Park, New Jersey); and a blend of 85% by weight (of the blend) of Ultramid® B36 available from BASF Corporation (Florham Park, New Jersey) and 15% by weight of DuPont™ Selar® PA3426 available from E.I. du Pont de Nemours and Company, Inc. (Wilmington, Delaware).

Oxygen barrier layer 95 may comprise any chlorine-free oxygen barrier material. In the embodiment of third packaging sheet 90 comprising third multilayer film 98, the barrier material is split (i.e., in non-adjacent layers) as a result of the seven-layer tubular extrudate being collapsed and flattened upon itself to form two inner tubular extrudate and thermally laminated to itself at the two inner tubular extrudate layers. Examples of chlorine-free barrier materials include but are not limited to EVOH, polyamide, polyglycolic acid and acrylonitrile-methyl acrylate copolymer.

EVOH is as described above. Specific non-limiting examples of EVOH include EVAL™ H171 available from EVAL Company of America (Houston, Texas); Evasin EV-3801V available from Chang Chun Petrochemical Co., Ltd. (Taipei, Taiwan); and Soarnol® ET3803 available from Soarus L.L.C. (Arlington Heights, Illinois).

Polyamide is as described above. Specific non-limiting examples of polyamide include Nylon MXD6® (various grades) available from Mitsubishi Gas Chemical Company, Inc. (Tokyo, Japan); and a blend of 85% by weight (of the blend) of Ultramid® B36 available from BASF Corporation (Florham Park, New Jersey) and 15% by weight of DuPont™ Selar® PA3426 available from E.I. du Pont de Nemours and Company, Inc. (Wilmington, Delaware).

Polyglycolic acid (PGA) (or polyglycolide) is a biodegradable, thermoplastic polymer and the simplest linear, aliphatic polyester. It offers high gas barrier to carbon dioxide and oxygen, controllable hydrolysis and excellent mechanical strength.

Acrylonitrile-methyl acylate copolymer imparts high barrier to gases (such as oxygen), aromas and fragrances as well as chemical resistance and inertness. A specific non-limiting example of acrylonitrile-methyl acrylate copolymer is Barex® (various grades) available from lneos Olefins & Polymers USA (League City, Texas).

Second intermediate layer 96 may comprise tie material or polyamide. Tie material and polyamide are each as described above.

Moisture barrier layer 97 may comprise HDPE, LDPE, copolymers of ethylene and at least one alpha olefin, or blends of such; each of these materials is as described above. Moisture barrier layer 97 may also comprise tie materiel; this tie is as described above. Furthermore, moisture barrier layer 97 may also comprise nucleating agent, hydrocarbon or blends of such; each of these materials is as described above. As such, in one embodiment of third packaging sheet 90, moisture barrier layer 97 may comprise a blend of HDPE and nucleating agent. In another embodiment of third packaging sheet 90, moisture barrier layer 97 may comprise a blend of HDPE, tie material and nucleating agent.

Generic packaging sheet 60, as embodied in first packaging sheet 70, second packaging sheet 80, third packaging sheet 90 or otherwise may be included in a package for a product. In one embodiment, the package comprising the chlorine-free packaging sheet described in this application may be a thermoformed package resulting from the packaging sheet having been thermoformed.

A description of "thermoformed" is provided above. Furthermore, thermoforming and other similar techniques are well known in the art for packaging. (See Throne, "Thermoforming," Encyclopedia of Polymer Science and Technology, Third Edition, 2003, Volume 8, pp. 222-251 (John Wiley & Sons, Inc., Hoboken, New Jersey), which is incorporated in its entirety in this application by this reference; see also Irwin, "Thermoforming," Modern Plastics Encyclopedia, 1984-1985, pp. 329-336 (McGraw-Hill, Inc., York, New York), which is incorporated in its entirety in this application by this reference; see also "Thermoforming," The Wiley Encyclopedia of Packaging Technology, Second Edition, 1997, pp. 914-921 (John Wiley & Sons, Inc., New York, New York), which is incorporated in its entirety in this application by this reference.) Suitable thermoforming methods include standard, deep-draw or plug-assist vacuum During standard vacuum forming, a thermoplastic web, such as a film or sheet, is heated and a vacuum is applied beneath the web allowing atmospheric pressure to force the web into a preformed mold. When relatively deep molds are employed, the process is referred to as a "deep-draw" application. In a plug-assist vacuum forming method, after the thermoplastic web has been heated and sealed across a mold cavity, a plug shape similar to the mold shape impinges on the thermoplastic web and, upon the application of vacuum the thermoplastic web conforms to the mold surface.

The thermoformed package comprising the chlorine-free packaging sheet described in the present application may be a cup, a tub, a bucket, a tray or a myriad of other items. Furthermore, the product contained in the thermoformed package may be a food, non-food, medical and/or industrial product. Examples of such products include but are not limited to syrups (including but not limited to breakfast syrup, cough syrup, etc.), creams, cheeses, condiments (including but not limited to salad dressings, jellies, jams, ketchup, etc.), personal care items (including but not limited to shampoos, hand creams, mouthwashes, toothpastes, antacids, etc.), medications, liquid detergents, oils, pates, pet foods, glues, beverages (including alcoholic and non-alcoholic) and confections (including but not limited to hard sweets, fudge, toffee, licorice, chocolate, jelly candies, marshmallow, marzipan, divinity, pastry, chewing gum, ice cream, etc.).

Generic packaging sheet 60, as embodied in first packaging sheet 70, second packaging sheet 80, third packaging sheet 90 or otherwise may manufactured by various methods. In general, the methods comprise the sequential steps of (a) adding thermoplastic resins to extruders to extrude an outer layer of an n-layer multilayer barrier film, to extrude a barrier component of the multilayer barrier film and to extrude an inner layer of the multilayer barrier film, such that the barrier component is positioned between the outer layer and the inner layer of the multilayer barrier film and such that the multilayer barrier film has a first surface and an opposing second surface; (b) heating the thermoplastic resins to form streams of melt-plastified polymers; (c) forcing the streams of melt-plastified polymers through a die having a central orifice to form a tubular extrudate having a diameter and a hollow interior; (d) expanding the diameter of the tubular extrudate by a volume of fluid (such as a volume of gas) entering the hollow interior via the central orifice; (e) collapsing the tubular extrudate; (f) flattening the tubular extrudate to form two inner tubular extrudate layers; (g) attaching a first rigid component to the first surface of the multilayer barrier film; and (h) attaching a second rigid component to the opposing second surface of the multilayer barrier film.

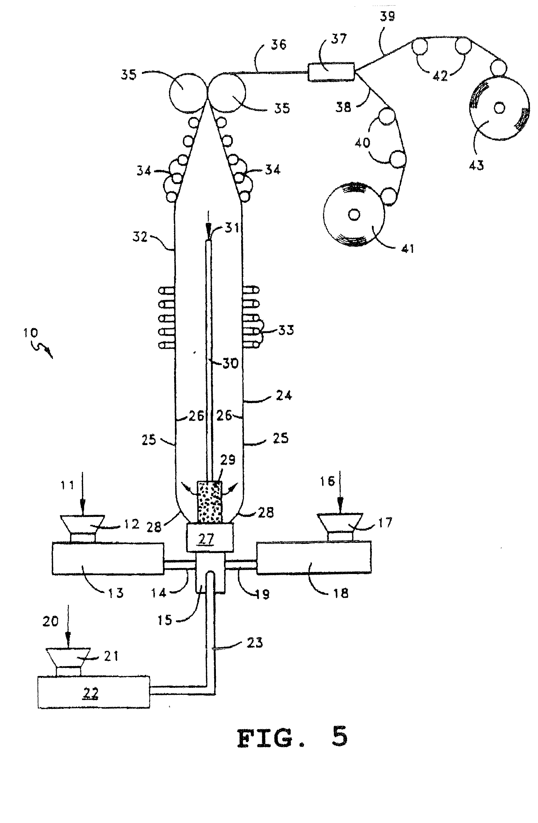

Referring again to the drawings, FIG. 5 is a schematic representation of a blown film process for producing a multilayer film included in the chlorine-free packaging sheet described in the present application. Advantageously, this multilayer blown film may be extruded, blown, cooled, collapsed, etc., using well known and available equipment.

FIG. 5 depicts a schematic view of a typical process 10 for steps (a) - (f) above. In the depicted process 10, first thermoplastic resin 11 for an outer layer of a multilayer barrier film is placed in first hopper 12 of first extruder 13. The extruder 13 is heated to an appropriate temperature above the melting point of the first thermoplastic resin 11 such that first thermoplastic resin 11 is heated to form streams of melt-plastified polymers. Extruder 13 may also be provided with a jacketed chamber through which a cooling medium is circulating. The rotation of a screw within first extrudes 13 forces melt-plastified polymer through first connecting pipe 14 through coextrusion die 15. Simultaneous with the introduction of the melt-plastifted first thermoplastic resin 11 to coextrusion die 15, second thermoplastic resign 16 (which has been placed in second hopper 17 of second extruder 18) is similarly heated to form streams of melt-plastified polymers and forced by second extruder 18 through second connecting pipe 19 through coextrusion die 15. Third thermoplastic resin 20 is similarly heated to form streams of melt-plastified polymers and forced by third extruder 22 through third connecting pipe 23 through coextrusion die 15. In the embodiment of first packaging sheet 70, three extruders are typically used to produce first multilayer film 72. In other embodiments, additional extruders may be used. For example, four extruders are typically used to produce second multilayer film 82; and seven extruders are typically used to produce third multilayer film 92. However, in the coextrusion art it is also known that when the same thermoplastic resin is used in more than one layer of a multilayer film, the melt-plastified resin from one extruder may be divided at the die and used for multiple layers. In this way, a five-layer film may be made using three or four extruders.

The coextrusion die 15 has an annular, preferably circular, opening and is designed to bring together the first, second and third melt-plastified thermoplastic resins such that the first, second and third melt-plastified thermoplastic resins are coextruded out of the coextrusion die 15 as tubular extrudate 24. In the art, the term "tubular extrudate" is synonymous with the terms "bubble" and "blown bubble." Coextrusion die 15 is equipped, as is known in the art, with a central orifice through which a fluid, such as a volume of gas, is typically introduced to radially expand the diameter of tubular extrudate 24 forming an expanded tubular extrudate 24 having an exterior surface 25 and interior surface 26. In a multilayer film, such as first multilayer film 72, outer layer 74 of first multilayer film 72 corresponds to the outermost layer of tubular extrudate 24 and inner layer 76 of first multilayer film 72 corresponds to the innermost layer of tubular extrudate 24.

Tubular extrudate 24 may be externally cooled by cooling means such as air ring 27 which blows cooling air along lower outer surface 28 of tubular extrudate 24. Simultaneously, internal surface 26 may be cooled, such as by contact with refrigerated air (at a temperature of, for example 5°C-15°C) delivered through an internal bubble cooling unit having perforated pipe 29. Perforated pipe 29 is concentrically disposed around longer pipe 30 of narrower diameter. Longer pipe 30 is open at distal end 31 to receive and remove warmer air which has risen to upper end 32 of tubular extrudate 24. The streams of external and internal cooling fluids, such as air and/or water, constitute a cooling zone serving to chill or set tubular extrudate 24 at the desired diameter.

Tubular extrudate 24 may be stabilized by external concentric cage 33 to help maintain tubular extrudate 24 along a straight path to a collapsing frame or ladder comprising a series of converging rolls 34. Concentric cage 33 may be particularly useful to stabilize films made using an internal bubble cooling unit.

Tubular extrudate 24 is collapsed in converging rolls 34 and flattened by driven nip rolls 35, which may also assist in collapsing tubular extrude 24. Driven nip rolls 35 function to pull and/or transport tubular extrudate 24 and also to collapse tubular extrudate 24 to form flattened extrudate 26. However, other transport means and collapsing means may be employed and are known in the art; these means include but are not limited to such apparatus as collapsing ladders and drive belts.

Referring now to FIG. 6, a cross-sectional view of tubular extrudate 24, made to the of FIG. 5, is shown having exterior surface 25 and interior surface 26. Tubular extrudate 24 has three layers: inner tubular extrudate layer 50, barrier component extrudate layer 51 and outer tubular extrudate 52. Barrier component extrudate layer 51 may comprise any of layers, including but not limited to one layer as in first barrier component 78 (see FIG. 2), two layers as in second barrier component 88 (see FIG. 3) and five layers as in third barrier component 98 (see FIG. 4).

As tubular extrudate 24 is collapsed and flattened by converging rolls 34 and driven nip rolls 35 to form flattened extrudate 36, two inner tubular extrudate layers 50 are formed. The two inner tubular extrudate layers 50 may thermally laminate to themselves to form one inner layer, resulting in a palindromic multilayer film haying a first surface and a second surface. This is achieved if the blown film equipment is operated at a high enough output rate (as determined by a person of ordinary skill in the art without undue experimentation) so that the flattened extrudate 36 is of sufficient temperature for such thermal lamination. If flattened extrudate 36 is laminated to itself, the resulting palindromic, multilayer film is conveyed by rollers (not shown in FIG. 5) to a wind-up reel (not shown in FIG. 5) for further processing.

Alternatively, flattened extrudate 36 may be slit open into one or more sheets which may be wound on paperboard or plastic cores for subsequent dispensing or use, In the embodiment depicted in FIG. 5, flattened extrudate 36 is conveyed through slifter 37 where the flattened extrudate is slit by knives to form a first multilayer film 38 and a second multilayer film 39. First multilayer film 38 is conveyed by first rollers 40 to first wind-up reel 41 for further processing, and second multilayer film 39 is conveyed by second rollers 42 to second wind-up reel 43 for further processing.

In a multilayer film included in the chlorine-free packaging sheet described in the present application, it will be appreciated by those skilled in the art that such parameters as the coextrusion die diameter, nip roll speed, amount and temperature of fluid (e.g., air) introduced and captured between the coextrusion die and nip rolls, flow rate of the tubular extrudate from the coextrusion die, melt temperatures, type of cooling medium (e.g. water or air), and internal and external tubular extrudate cooling temperatures may all be adjusted to optimize process conditions. For example, the circumference or lay-flat width of the tubular extrudate may be increased to varying degrees above that of the coextrusion die diameter by modificafion of one or more of the above parameters. Similarly, the tubular extrudate may be conditioned or modified, such as by internal and/or external application and variation of the types, amounts and characteristics of materials (including gaseous or liquid fluids contacting the tubular extrudate) as well as by setting and changing such parameters as pressures and temperatures. It will be understood in the art that such parameters may vary and will depend upon practical considerations, such as the particular thermoplastic resins comprising the tubular extrudate, the presence or absence of modifying agents, the equipment used, desired rates of production, desired tubular extrudate size (including diameter and thickness), and the quality and desired performance characteristics of the tubular extrudate, These and other process parameters are expected to be set by one skilled in the art without undue experimentation. Also, certain non-uniformities in processing, including but not limited to variation in film thickness, unequal heating or cooling of the tubular extrudate and non-uniform air flows, may be obviated by rotation with or without oscillation, either alone or in combination, of the coextrusion die, the air ring or other apparatus with respect to the vertical axis of the tubular extrudate. It should also be understood that while manufacture of the tubular extrudate has been described above with respect to a coextrusion process which used vertical upward transport of the tubular extrudate and expanded tubular extrudate, those skilled in the art may extrude and expand the tubular extrudate in other directions including vertically downward.

After the multilayer film is produced, a first rigid component is attached to a first surface of the film. A second rigid component is then attached to the opposing second surface. The first rigid component and the second rigid component may be attached by various methods as known in the art. These methods include but are not limited no thermal lamination, adhesive lamination (including solvent or solvent-less lamination), extrusion lamination and extrusion coating. As described above, the parameters for such lamination or coating are expected to be set by one skilled in the art without undue experimentation.

### EXAMPLES

Examples 1-8 are chlorine-free packaging sheets exemplifying the present invention. Each of these packaging sheets is produced, generally, as follows: A multilayer, blown, coextruded film is produced and thermally laminated to itself at the inner layers, then a first rigid component is extrusion coated on a first surface of the blown film and then a second rigid component is extrusion coated on the opposing second surface of the blown film.

Comparative Examples are also produced and/or were obtained. Comparative Examples 1,5 and 6 are produced, generally, as follows: A multilayer, blown, coextruded film is produced and then a first rigid component is extrusion coated on 2 first surface of the blown film. Comparative examples 2, 3 and 4 were obtained and are further described below.

More specifically, in producing the blown films of Examples 1-8 and Comparative examples 1,5 and 6, various materials are first added to the extruders of a blown film line to produce a seven-layer blown, coextruded film. The seven-layer blown, coextruded films of Examples 1-8 have the compositions (by approximate weight percent) shown in TABLE 1 and TABLE 2; and the seven-layer blown, coextruded films on Comparative examples 1, 5 and 6 have the compositions (by approximate weight percent) shown in TABLE 3.

**TABLE 1**

| | Example 1 | | | Examples 2-5 | | |
|---|---|---|---|---|---|---|
| | weight % of Film | Component | Weighs% of Layer | weight% of Film | Component | weigh % of Layer |
| First (or "Outer") | 13.90 | SB | 98.50 | 9.50 | SB | 97.50 |
| | | processing aid | 1.50 | | processing aid | 1.50 |
| | | | | | processing aid | 1.00 |
| Second (or "First Barrier Component") | 12.60 | EVA 1 | 100.00 | 24.00 | HDPE | 78.00 |
| | | | | | Tie Resin 2 | 20.00 |
| | | | | | LDPE/Nucleafing Agent Blend | 2.00 |
| | | | | | | |
| Third (or "First Intermedate") | 7.60 | Tie Resin 1 | 100.00 | 7.60 | Tie Resin 2 | 100.00 |
| Fourth (or "Oxygen Barrier") | 12.80 | EVOH | 100.00 | 12.80 | EVOH | 100.00 |
| Fifth (or "Second Intermediate") | 7.60 | Tie Resin 1 | 100.00 | 7.60 | Tie Resin 2 | 100.00 |
| Sixth (or "Moisture Barrier") | 31.50 | HDPE | 98.00 | 29.00 | HDPE | 98.00 |
| | | LDPE/Nucleafing Agent Blend | 2.00 | | LDPE/Nucleating Agent Blend | 2.00 |
| | | | | | | |
| Seventh (or "Inner") | 14.00 | EVA 2 | 45.70 | 9.50 | EVA 2 | 45.70 |
| | | LLDPE | 54.30 | | LLDPE | 54.30 |

**TABLE 2**

| | Example 6 | | | Examples 7-8 | | |
|---|---|---|---|---|---|---|
| | Weight % of Film | Component | Weight % of Layer | Weight % of Film | Component | Weight % of Layer |
| First (or "Outer") | 12.90 | SB | 100.00 | 14.90 | SB | 98.50 |
| | | | | | processing aid | 1.50 |
| Second (or "First Barrier Component*) | 21.10 | HDPE | 78.00 | 13.70 | EVA 1 | 100.00 |
| | | Tie Resin 3 | 20.00 | | | |
| | | LDPE/Nucteating Agent Blend | 2.00 | | | |
| Third (or "First Intermedate") | 6.80 | Polyamide copolymer | 100.00 | 7.60 | Tie Resin 1 | 100.00 |
| Fourth (or "Oxygen Barrier") | 20.40 | EVOH | 100.00 | 12.80 | EVOH | 100.00 |
| Fifth (or "Second Intermediate") | 6.80 | Polyamide copolymer | 100.00 | 7.60 | Tie Resin 1 | 100.00 |
| Sixth (or "Moisture Barrier") | 17.00 | HDPE | 78.00 | 28.50 | HDPE | 98.00 |
| | | Tie Resin 3 | 20.00 | | LDPE/Nucleating Agent Blend | 2.00 |
| | | LDPE/Nucleafing Agent Blend | 2.00 | | | |
| Seventh (or "Inner") | 15.00 | EVA 1 | 100.00 | 14.90 | EVA 2 | 61.00 |
| | | | | | LLDPE | 35.00 |
| | | | | | processing aid | 4.00 |

**TABLE 3**

| | Comparative Example 1 | | | Comparative Example 5 | | | Comparative Example 6 | | |
|---|---|---|---|---|---|---|---|---|---|
| | Weight % of Film | Component | Weight % of Layer | Weight % of Film | Component | Weight % of Layer | Weight % of Film | Component | Weight % of Layer |
| First | 11.50 | EVA 2 | 61.00 | 11.40 | EVA 2 | 61.00 | 11.50 | EVA 2 | 61.00 |
| (or "Outer") | | LLDPE | 35.00 | | LLDPE | 35.00 | | LLDPE | 35.00 |
| | | processing aid | 4.00 | | processing aid | 4.00 | | processing aid | 4.00 |
| Second | 14.20 | HDPE | 79.00 | 23.20 | HDPE | 98.00 | 13.20 | Tie Resin 4 | 100.00 |
| (or "First | | Tie Resin 3 | 20.00 | | LDPE/Nucleating | 2.00 | | | |
| Barrier Component") | | LDPE/Nucleating Agent Blend | 1.00 | | Agent Blend | | | | |
| Third (or "First Intermedate") | 7.00 | Polyamide Copolymer | 100.00 | 6.90 | Tie Resin 1 | 100.00 | 7.00 | Polyamide Copolymer | 100.00 |
| Fourth (or"Oxygen Barrier) | 22.00 | EVOH | 100.00 | 21.80 | EVOH | 100.00 | 25.10 | EVOH | 100.00 |
| Fifth (or "Second Intermediate") | 7.00 | Polyamide Copolymer | 100.00 | 6.90 | Tie Resin 1 | 100.00 | 7.00 | Polyamide Copolymer | 100.00 |
| Sixth | 13.50 | HDPE | 79.00 | 24.00 | HDPE | 98.00 | 11.50 | Tie Resin 4 | 100.00 |
| (or *Moisture | | Tie Resin 3 | 20.00 | | LDPE/Nucleating | 2.00 | | | |
| Barrier") | | LDPE/Nucleating Agent Blend | 1.00 | | Agent Blend | | | | |
| Seventh | 24.80 | HDPE | 97.00 | 5.80 | Polypropylene | 100.00 | 24.70 | HDPE | 84.00 |
| (or "Inner") | | processing aid | 2.00 | | Copolymer | | | Hydrocarbon Resin | 15.05 |
| | | LDPE/Nucleating Agent Blend | 1.00 | | | | | LDPE/Nucleating Agent Blend | 1.00 |

As noted in TABLE 1, the blown films included in the chlorine-free packaging sheets of Examples 2-5 are identical; and, as noted in TABLE 2, the blown films included in the chlorine-free packaging sheets of Example 7-8 are identical.

The materials included in the various blown films are as follows:
EVA 1 has a reported vinyl acetate content of about 12.8% by weight (of total EVA composition), a reported melt index of about 0.4 g/10 min, a reported density of about 0.934 g/cm³ and a reported peak melting temperature of about 94°C and is commercially available as Escorene™ Ultra LD 705.MJ from ExxonMobil Chemical Company (Houston, Texas).
EVA 2 has a reported vinyl acetate content of about 26.2% by weight (of total EVA composition), a reported melt index of about 2.3 g/10 min, a reported density of about 0.951 g/cm³ and a reported peak melting temperature of about 74°C and is commercially available as Escorene™ Ultra LD 768.MJ from Exxonmobil Chemical Company (Houston, Texas).

EVOH has a reported ethylene content of about 38 mole percent, a reported density of about 1.17 g/cm³ and a reported melting point of about 173°C and is commercially available as Soarnol® ET3803 from Soarus L.L.C, (Arlington Heights, Illinois).

HDPE has a reported melt index of about 2.0 g/10 min and a reported density of about 0.960 g/cm³ and is commercially available as Alathon® M6020 from Equistar Chemicals LP (Houston, Texas),

Hydrocarbon Resin is an amorphous, low-molecular-weight hydrocarbon resin derived from aromatic petrochemical feedstocks, has a reported ring and ball softening point of about 140°C and a reported density of about 0.98 g/cm³ and is commercially available as Plastolyn® R1140 Hydrocarbon Resin from Eastman Chemical Company (Kingsport, Tennessee).

LDPE/Nucleating Agent Blend is a clarifying agent masterbatch haying a reported specific gravity of about 0.93 and is commercially available as Polybach® CLR122 from A. Schulman Inc. (Akron, Ohio),

LLDPE comprises butene LLDPE resin, has a reported density of about 0.918 g,cm³, reported melt index of about 1.0 g/10 min, a reported peak melting temperature of about 121°C and a reported crystallization point of 106°C and is commercially as ExxonMobil LLDPE LL1001.32 from ExxonMobil Chemical Company (Houston, Texas).

Polyamide Copolymer comprises nylon 6/6,6, has a reported density of about 1.12g/cm³ and a reported melting point of about 193°C and is commercially available as Ultramid® C40 L 01 from BASF Corporation (Florham Park, New Jersey).

Polypropylene Copolymer is an impact copolymer, has a reported melt flow of about 0.75 g/10 min, a reported density of about 0.905 g/cm³ and a reported melting point range of about 160°C- 165°C and is commercially available as Propylene 4170 from Total Petrochemicals USA, Inc. (Houston, Texas).

Processing aids used vary depending on the equipment used and include antiblock agents, slip agents, stabilizing agents and release agents, Such aids are known to a person of ordinary skill in the art and may be determined without undue experimentation.

SB has a reported specific gravity of about 1.02 g/cm³, a reported melt flow rate (200°C/5.0 kg) of about 10,0 g/10 min and a reported vicat softening point of about 61°C and is commercially available as DK13 K-Resin® Styrene Butadiene Copolymers from Chevron Phillips Chemical Company LP (The Woodlands, Texas).

Tie Resin 1 comprises anhydride-modified LLDPE resin, has a reported density of about 0.91 g/cm³, a reported melt flow rate (190°C/2. 16 kg) of about 1.7 g/10 min, a reported melting point of about 119°C and a reported vicat softening point of about 84°C and is commercially available as DuPont™ Bynel® 41E687 from E.I. du Pont de Nemours and Company, Inc. (Wilmington, Delaware).

Tie Resin 2 comprises anhydride-modified LLDPE resin, has a reported density of about 0.93 g/cm³, a reported melt flow rate (190°C/2.16 kg) of about 1.2 g/10 min, a reported melting point of about 127°C and a reported vicat softening point of about 110°C and is commercially available as DuPont™ Bynel® 4164 from E.I. du Pont de Nemours and Company, Inc. (Wilmington, Delaware).

Tie Resin 3 comprises anhydride-modified LLDPE resin, has a reported density of about 0.91 g/cm³, a reported melt flow rate (190°C/2.16 kg) of about 2.7 g/10 min, a reported melting point of about 115°C and a reported vicat softening point of about 103°C and is commercially available as DuPont™ Bynel® 41E710 from E.I. du Pont de Nemours and Company, Inc. (Wilmington, Delaware).

Tie Resin 4 comprises maleic anhydride-modified LLDPE resin, has a reported melt index of about 1.0 g/10 min and a reported density of about 0.9200 g/cm³ and is commercially available as GT4157 from Westlake Chemical Corporation (Houston, Texas).

In making the blown films of examples 1-8 and Comparative examples 1, 5 and 6, one extruder is used for each layer. If a layer comprises more than one thermoplastic resin (as in, for example, the first, sixth and seventh layers of Example 1), the resins for that layer are pre-blended prior to being added to the extruder. The layer components are then heated to form streams of melt-plastified polymers and extruded through a die. The coextruded plastified, extruded components then form a tubular extrudate (or bubble). The outer layer of the blown film is the outermost layer of the tubular extrudate; the inner layer of the blown film is the innermost layer of the tubular extrudate. The diameter of the tubular extrudate is expanded by air entering the extrudate at the die. The approximate die diameter, lay-flat width of the expanded tubular extrudate and blow-up ratio (i.e., the ratio of the diameter of the expanded tubular extrudate to the diameter of the die) used to produce the blown films of examples 1-8 and Comparative Examples 1, 5 and 6 are shown in TABLE 4.

**TABLE 4**

| | Die Diameter (inches) | Lay Flat Width (inches) | Blow-Up Ratio |
|---|---|---|---|
| Example 1 | 16 | 40.5 | 1.61 |
| Examples 2-5 | 16 | 40 | 1.59 |
| Example 6 | 16 | 41 | 1.63 |
| Examples 7-8 | 16 | 41 | 1.63 |
| Comparative Example 1 | 16 | 43 | 1.71 |
| Comparative Example 5 | 16 | 41 | 1.63 |
| Comparative Example 6 | 20 | 40 | 1.27 |

The expanded tubular extrudate is then collapsed by a collapsing frame and flattened through nip rolls. In the collapsing and flattening, two inner tubular extrudate layers are formed.

For Examples 1-8, the blown film equipment is operated at a high enough output rate (as determined by a person of ordinary skill in the art without undue experimentation) so that the collapsed, flattened tubular extrudate is of a sufficient temperature to laminate to itself at the two inner tubular extrudate layers. In laminating to themselves, the two inner tubular extrudate layers form one inner layer and a palindromic thirteen-layer film results.

For Comparative Example 1, 5 and 6, the collapsed, flattened tubular extrudate is not laminated to itself at the two inner tubular extrudate layers. For these comparative examples, the tubular extrudate is slit into two seven-layer films.

For the thirteen-layer films of Examples 1-8, the first surface of each thirteen-layer film is then extrusion coated with a rigid component. After the first surface is extrusion coated with a rigid component, the second surface is extrusion coated with a rigid component For the seven-layer films of Comparative Examples 1, 5 and 6 only the first surface (i.e., the surface comprising EVA) is extrusion coated with a rigid component. The rigid components have the compositions (by approximate weight percent) shown in TABLE 5.

**TABLE 5**

| | First Rigid Component | | | | | | Second Rigid Component | | | | | |
|---|---|---|---|---|---|---|---|---|---|---|---|---|
| | HIPS 1 | HIPS 2 | GPPS 1 | GPPS 2 | Color Concentrate | Processing Aid | HIPS 1 | HIPS 2 | GPPS 1 | GPPS 2 | Color Concentrale | Processing Aid |
| Example 1 | 74,50% | | 21.35% | | 4.00% | 0.15% | 74.50% | | 21.35% | | 4.00% | 0.15% |
| Example 2 | 75.25% | | 20.15% | | 4.00% | 0.60% | 75.25% | | 20.15% | | 4.00% | 0.60% |
| Example 3 | 75.25% | | 20.15% | | 4.00% | 0.60% | 75.25% | | 20.15% | | 4.00% | 0,60% |
| Example 4 | 75.70% | | 20.90% | | 2.80% | 0.60% | 75.70% | | 20.90% | | 2.80% | 0.60% |
| Example 5 | 76.70% | | 20.90% | | 2.80% | 0.60% | 75.70% | | 20.90% | | 2.80% | 0.60% |
| Example 6 | | 76.00% | | 20.00% | 2.80% | 1.20% | | 76.00% | | 20.00% | 2.80% | 1.20% |
| Example 7 | 75.46% | | 21.45% | | 2.79% | 0.30% | 75.46% | | 21.45% | | 2.79% | 0.30% |
| Example 8 | 75,40% | | 21.50% | | 2.80% | 0.30% | 76.40% | | 21.50% | | 2,80% | 0.301% |
| Comparative Example 1 | | 76.00% | | 20.00% | 2.80% | 1.20% | not applicable | | | | | |
| Comparative Example 5 | | 76.00% | | 20.00% | 2.80% | 1.20% | not applicable | | | | | |
| Comparative Example 6 | | 97.20% | | | 2N.80% | | not applicable | | | | | |

The compositions shown in TABLE 5 may be achieved by a blend of various layers comprising HIPS, GPPS, color concentrate and processing aid. For example, for Example 2, each of the first rigid component and the second rigid component comprises three layers. The first layer comprises 73.50% by weight (of the first layer) HIPS 1, 20.50% by weight GPPS 1, 4.00% by weight color concentrate and 2.00% by weight processing aid; the second layer comprises 76.00% by weight (of the second layer) HIPS 1, 20% by weight GPPS 1 and 4.00% by weight color concentrate; and the third layer comprises 73.50% by weight (of the third layer) HIPS 1, 20.50% by weight GPPS 1,4.00% by weight color concentrate and 2.00% by weight processing aid. Taken together, these three layers result in a first rigid component and a second rigid component each with the composition shown in TABLE 5.

As noted in TABLE 5, for Examples 1-8 the same rigid component is used for each surface of the thirteen-layer film (i.e., for both the first rigid component and the second rigid component). Also, the rigid component used for example 2 is identical to the rigid component used for Example 3, the rigid component used for example 4 is identical to the rigid component used for Example 5, and the rigid components used for examples 2 and 3 are substantially similar to that used for examples 4 and 5. As noted by the "not applicable," Comparative Examples 1, 5 and 6 have only a first rigid component (i.e., are extrusion coated only on the surface comprising EVA).

The materials included in the various rigid components are as follows:
Color concentrates are chosen based on the desired color of the chlorine-free packaging sheet. Such concentrates are known to a person of ordinary skill in the art and may be determined without undue experimentation.

GPPS 1 is a crystal (i.e., general purpose) polystyrene, has a reported melt flow (200°C/5 kg) of about 9.0 g/10 min, a reported vicat softening of about 101°C and a reported density of about 1.04 g/cm³ and is commercially available as Crystal Polystyrene 525B from Total Petrochemicals USA, Inc. (Houston, Texas).

GPPS 2 is a crystal (i.e., general purpose) polystyrene, has a reported melt flow (200°C/5 kg) of about 9.0 g/10 min, a reported vicat softening of about 101°C and a reported density of about 1.04 g/cm³ and is commercially available as Crystal Polystyrene 524B from Total Petrochemicals USA, Inc. (Houston, Texas).

HIPS 1 is a high impact polystyrene, has a reported melt flow (200°C/5 kg) of about 3.0 g/10 min, a reported vicat softening of about 102°C and a reported density of about 1.04 g/cm³ and is commercially available as Impact Polystyrene 825E from Total Petrochemicals USA, Inc. (Houston, Texas).

HIPS 2 is a super high impact polystyrene, has a reported melt flow (200°C/5 kg) of about 3.5 g/10 min, a reported vicat softening of about 98°C and a reported density of about 1.04 g/cm³ and is commercially available as Impact Polystyrene 945E from Total Petrochemicals USA, Inc. (Houston, Texas).

Processing aids vary depending on the equipment used and include antiblock agents, slip agents, stabilizing agents and release agents. Such aids are known to a person of ordinary skill in the art and may be determined without undue experimentation.

As mentioned above, Comparative Examples 2, 3 and 4 were obtained. Comparative Example 2 is a fully coextruded nine-layer sheet having the following structure: HIPS / tie / HDPE / tie / EVOH / tie / HDPE tie / HIPS. Comparative Example 3 is a fully coextruded five-layer sheet having the following structure: HIPS / HDPE / EVOH / HDPE / HIPS. And comparative Example 4 is a fully coextruded five-layer sheet having the following structure: HIPS+GPPS / EVA / PVdC / EVA / HIPS+GPPS. (For these sheets, "/" is used to indicate the layer boundary.) As fully coextruded sheets, the rigid components (i.e., HIPS or HIPS+GPPS) are extruded with the other layers and not coated on or laminated to a previously produced film (as in Examples 1-8 and Examples 1,5 and 6).

Examples 1-8 and Comparative Examples 1-6 were tested for various properties. In measuring the various properties, the thicknesses of the overall sheet, of the blown film, of the blown film's barner components and of the sheet's rigid components may be considered. These thicknesses, in mil, for each of the examples and comparative examples are shown in TABLE 6.

**TABLE 6**

| | Overall Sheet | Blown Film | Oxygent Barrier Components | Moisture Barrier Components | First Rigid Component | Second Rigid Component |
|---|---|---|---|---|---|---|
| Example 1 | 23 | 3.5 | not relevant | not relevant | 9.75 | 9.75 |
| Example 2 | 23 | 3.5 | 0.35 | 1.65 | 9.75 | 9.75 |
| Example 3 | 21 | 3.5 | not relevant | not relevant | 8.75 | 8.75 |
| Example 4 | 18.5 | 3.5 | not relevant | not relevant | 7.5 | 7.5 |
| Example 5 | 17 | 3.5 | not relevant | not relevant | 6.75 | 6.75 |
| Example 6 | 25 | 4 | 0.70 | not relevant | 10.5 | 10.5 |
| Example 7 | 25 | 3.5 | 0.35 | 1.00 | 10.75 | 10.75 |
| Example 8 | 23 | 3.5 | 0.35 | 1.00 | 9.75 | 9.75 |
| Comparative Example 1 | 25 | 4 | not relevant | not relevant | 21 | not applicable |
| Comparative Example 2 | 25 | not applicable | not relevant | not relevant | 8 | 8 |
| Comparative Example 3 | 25 | not applicable | 0.50 | 8.00 | 8 | 8.5 |
| Comparative Example 4 | 25 | not applicable | 1.30 | 1.30 | 12 | 10.5 |
| Comparative Example 5 | 25 | 4 | 0.70 | not relevant | 21 | not applicable |
| Comparative Example 6 | 25 | 4 | 0.83 | 0.85 | 21 | not applicable |

A thickness is listed as "not applicable" if the sheet does not contain a blown film (as in Comparative Examples 2, 3 and 4) or a second rigid component in Comparative Examples 1, 5 and 6). A is listed as "not relevant" if the barrier property was not determined for that example (as the oxygen transmission rate was not measured for examples 1, 3, 4 and 5 and Comparative Examples 1 and 2 and as the water vapor transmission rate was not measured for Examples 1, 3, 4, 5 and 6 and Comparative Examples 1, 2, and 5).

Properties measured include the properties described below, with a reference to an ASTM Standard Test Method. Each standard test method referenced below is incorporated in its entirety in this application by this reference.

Combined Tear Initiation and Propagation Resistance is a measure oil the force required to both initiate and propagate (or continue) a tear in a plastic film or shee. To determine this force, both energy to break and elongation are determined in both the machine direction and the traverse (or cross) direction of the sheet. Energy to break is expressed in in*lbf (or "inch pounds" or "pounds inch") and elongation is expressed as a percentage, and both are measured in accordance with ASTM D1004, "Standard Test Method for Tear Resistance (Graves Tear) of Plastic Film and Sheeting." For this application, both measurements are normalized as per one mil of the packaging sheet thickness.

Tear Propagation Resistance is a measure of the force required to propagate (or continue) a tear in a plastic film or sheet. To determine this force, both energy to break and peak load are determined in both the machine direction the transverse (or cross) direction of the sheet. Energy to break is expressed in in*lbf (or "inch pounds" or "pounds inch") and peak load is expressed in lbf (or "pound force"), and are measured in accordance with ASTM D1938, "Standard Test Method for Tear-Propagation Resistance (Trouser Test) of Plastic Film and Thin Sheeting by a Single-Tear Method." For this application, both measurements are normalized as per one mil of the packaging sheet thickness.

Oxygen Transmission Rate is a measure of the rate of the transmission of oxygen gas through plastics in the form of film, sheeting, laminates, coextrusions, etc. It is expressed in cm³/100 in²/day and is measured in accordance with ASTM D3985, "Standard Test Method for Oxygen Gas Transmission Rate Through Plastic Film and Sheeting Using a Coulometric Sensor." For this application, the measured value is normalized as per one mil of thickness of the oxygen barrier material (i.e., PVdC or EVOH) in the packaging sheet tested, such that an oxygen transmission rate for a sheet expressed as 0.1 cc-mil/100 in²/day refers to 0.1 cc of oxygen transmitted through one mil of oxygen barrier in a 100 in²-size sheet per day.

Water Vapor Transmission Rate is a measure of the rate of the transmission if water vapor through flexible barrier materials. It is expressed in g/100in²/day and is measured in accordance with ASTM F1249, "Standard Test Method for Water Vapor Transmission Rate Through Plastic Film and Sheeting Using a Modulated Infrared Sensor." For this application, the measured value is normalized as per one mil of thickness of the moisture barrier material (i.e., PVDC or HDPE) in the packaging sheet tested, such that a water vapor transmission rate for a sheet expressed as 0.15 g-mil/100 in²/day refers to 0.15 g of water transmitted through one mil of moisture barrier in a 100in²-size sheet per day.

The measured values of the various properties of Examples 1-8 and Comparative Examples 1-6 are reported in TABLE 7 and in TABLE 8. Each value is an average of at least two measurements.

(The "**" in TABLE 7 and TABLE 8 are explained as follows: For Examples 2-5, the Combined Tear Initiation and Propagation Resistance and the Tear Propagation Resistance were determined by measuring the values for at least three samples of each packaging sheet and then averaging the at least twelve data points. This approach was selected as Examples 2-5 only vary by the thicknesses of the first rigid component and the thicknesses of the second rigid component; the compositions of the first rigid components, the compositions of the second rigid component and the compositions and the thicknesses of thirteen-layer films are either substantially similar or identical. For Example 2, the Normalized Oxygen Transmission Rate is assumed to be at least equal to (if not less than) the Normalized Oxygen Transmission Rate for Example 7, as the compositions thicknesses of the oxygen barrier layers are identical.)

**TABLE 7**

| | Combined Tear Initiation & Propagation Resistance | | | | Tear Propagation Resistance | | | |
|---|---|---|---|---|---|---|---|---|
| | Machine Direction | | Transverse Direction | | Machine Direction | | Transverse Direction | |
| | Normalized Energy to Break (in*lbf / mil) | Normalized Elongation (% / mil) | Normalized Energy to Break (in*lbf / mil) | Normalized Elongation (% / mil) | Normalized Energy to Break (in*lbf / mil) | Normalized Peak Load (lbf / mil) | Normalized Energy to Break (in*lbf / mil) | Normalized Peak Load (ibf / mil) |
| Example 1 | 0.080 | 0.357 | 0.107 | 0.435 | 0.106 | 0.064 | 0.123 | 0.113 |
| Examples 2-5** | 0.072 | 0.555 | 0.088 | 0.620 | 0.108 | 0.068 | 0.133 | 0.125 |
| Example 6 | 0.094 | 0.560 | 0.110 | 0.560 | 0.156 | 0.115 | 0.138 | 0.137 |
| Comparative Example 1 | 0.101 | 0.432 | 0.116 | 0.827 | 0.176 | 0.114 | 0.304 | 0.149 |
| Comparative Example 2 | 0.260 | 1.184 | 0.432 | 1.812 | 0.497 | 0.269 | 0.493 | 0.345 |
| Comparative Example 3 | 0.127 | 0.440 | not determined | not determ, | 0.264 | 0.141 | 0.366 | 0.237 |
| Comparative Example 4 | 0.071 | 0.296 | 0.072 | 0.330 | 0.112 | 0.062 | 0.090 | 0.076 |

TABLE 7 reports the normalized combined tear initiation and propagation resistance and the normalized tear propagation resistance for the packaging sheets of Examples 1-6 and Comparative Examples 1-4. As reported in TABLE 7, each of the sheets exemplifying the present invention has a normalized combined tear initiation and propagation resistance in both the machine direction and the transverse direction of less than about 0.115 in*lbf / mil energy to break and less than about 0.800 % / mil elongation, and has a normalized tear propagation resistance in both the machine and the transverse direction of less than about 0.300 in*lbf / mil energy to break and less than about 0.145 lbf / mil peak load. The packaging sheets of Comparative Examples 1-3 exceed the normalized combined tear initiation and propagation resistance and the normalized tear propagation resistance achieved by the chlorine-free packaging sheets Examples 1-6 and, therefore, do not exemplify the present invention. The packaging sheet of Comparative Example 4 achieves similar tear resistance values as the chlorine-free packaging sheets of Examples 1-6. However, this sheet is not chlorine-free (as it includes PVDC) and, therefore, does not exemplify the present invention.

As shown by the following observations, lower tear resistance numbers correlate to an ease of processing the packaging sheet. (And lower oxygen or water vapor transmission rates have no correlation to ease of processing.)

The chlorine-free packaging sheet of Example was thermoformed into a cup and filled with a liquid product. Sticking of the sheet to the contact heater plate was observed, resulting in sealing issues. However, the sticking was attributed to the processing aid in the rigid component and not due to the overall structural components (e.g., rigid component(s) and multilayer film) of the chlorine-free packaging sheet.

The chlorine-free packaging sheet of example 2 was thermoformed into a cup and filled with a liquid product. No sticking, forming, cutting, filling or sealing issues were observed.

The chlorine-free packaging sheet of Example 3 was thermoformed into a cup and filled with a liquid product. No sticking, forming, cutting, filling or sealing issues were observed.

The chlorine-free packaging sheet of Example 5 was thermoformed into a cup and filled with a liquid product. No sticking, forming, cutting, filling or sealing issues were observed.

The chlorine-free packaging sheet of Example 7 was thermoformed into a cup and filled with a liquid product. No significant sticking, forming, cutting, filling or sealing issues were observed.

The chlorine-free packaging sheet of Example 8 was thermoformed into a cup and filled with a liquid product. No sticking, forming, cutting, filling or sealing issues were observed.

The packaging sheet of Comparative Example 1 was thermoformed into a cup and filled with a liquid product. Moderate sticking of the sheet to the contact heater plate was observed. In filling the cup with the liquid product, the moderate sticking caused the sheet to ripple and the product to splash out of the cup. The sticking was to the seven-layer blown film used in the packaging sheet and to the absence of a second rigid component.

The packaging sheet of Comparative Example 5 was thermoformed into a cup and filled with a liquid product. Some splashing of the product was observed. The splashing was attributed to the sticking of the sheet to the contact heater plate, which was attributed to the seven-layer blown film used in the packaging sheet and to the absence of a second rigid component.

The packaging sheet of Comparative Example 6 was thermoformed into a cup and filled with a liquid product. Some sticking of the sheet to the contact heater plate and small stringers left after trimming (i.e., cutting) were both observed, These were attributable to the seven-layer blown film used in the packaging sheet and to the absence of a second rigid component.

**TABLE 8**

| | Normalized Oxygen Transmission Rate (cc-mil/100in2/day) | Normalized Water Vapor Transmission Rate (g-mil/100in21day) |
|---|---|---|
| Example 2 | **0.0608 | 0.1172 |
| example 6 | 0.0625 | not determined |
| Examples 7 | 0.0608 | 0.0966 |
| Examples 7 - Thermoformed Cup | 0.0299 | 0.0036 |
| Examples 8 | 0.0679 | 0.078 |
| Comparative Example 3 | 0.1093 | 0.3056 |
| Comparative Examples 4 | 0.0878 | 0.0456 |
| Comparative Examples 4 - Thermoformed Cup | 0.0970 | 0.0129 |
| Comparative Examples 5 | 0.0398 | not determined |
| Comparative Example 6 | 0.1012 | 0.0827 |
| Comparative Example 6 - Thermoformed Cup | 0.0634 | 0.0025 |

TABLE 8 reports the normalized oxygen transmission rate for the packaging sheets of Examples 2, 6, 7 and 8 and Comparative Examples 3-6. TABLE 8 further reports the normalized water vapor transmission rate for the packaging sheets of examples 2, 7 and 8 and Comparative Examples 3, 4 and 6. Additionally, the packaging sheets of Example 7, Comparative Example 4 and Comparative Example 6 were thermoformed into cups and also measured for oxygen transmission rate and water vapor transmission rate. The oxygen transmission rates for the packaging sheets of Example 2, 6, 7 and 8 and Comparative Examples 3-6 were measured at about 23°C, 80% internal relative humidity and 80% external relative humidity. The water vapor transmission rates for the packaging sheets of Example 2, 7 and 8 and Comparative Examples 3, 4 and 6 were measured at about 38°C, 0% internal relative humidity and 90% external relative humidity. The oxygen transmission rates for the thermoformed cups of the packaging sheets of Example 7, Comparative example 4 and Comparative example 6 were measured at about 23°C, 80% internal relative humidity and 50% external relative humidity. The water vapor transmission rates for the thermoformed cups of the packaging of Example 7, Comparative Example 4 and Comparative Example 6 were measured at about 38°C, 0% internal relative humidity and 50% external relative humidity.

As reported in TABLE 8, each of the sheets (and thermoformed cup) exemplifying the present invention has a normalized oxygen transmission rate of less than about 0.1 cc-mil/100 in²/day and a normalized water vapor transmission rate of less than about 0.15 g-mil/100 in²/day. The packaging sheet of Comparative example 3 exceeds the normalized oxygen transmission rate and the normalized water vapor rate achieved by the chlorine-free packaging sheets (and thermoformed cup) of Examples 2, 6, 7 and 8 and also exceeds the normalized combined tear initiation and propagation resistance and the normalized tear propagation resistance achieved by the chlorine-free packaging sheets of Examples 1-6; therefore, Comparative Example 3 does not the present invention. The packaging sheet (and thermoformed cup) of Comparative Example 4 achieves similar transmission rates as the chlorine-free packaging sheets (and thermoformed cup) of Examples 2, 6, 7 and 8. However, this sheet is not chlorine-tee (as it includes PVDC) and, therefore, does not exemplify the present invention. The packaging sheet of Comparative Example 5 achieves similar oxygen transmission as the chlorine-free packaging sheets (and thermoformed cup) of Examples 2, 6, 7 and 8. However, as noted above, this sheet had processing issues attributable to structural components (i.e., the multilayer film and the absence of a second rigid component) of the packaging sheet. The packaging sheet (and thermoformed cup) of Comparative Example 6 achieves similar transmission rates as the packaging sheets (and thermoformed cup) of Examples 2, 6, 7 and 8 (albeit the oxygen transmission rate for the packaging sheet of Comparative Example 6 is somewhat higher). However, as noted above, this sheet had processing issues attributable to structural components (i.e., the multilayer film and the absence of a second rigid component) of the packaging sheet.

The above description, the examples and the embodiments disclosed in the examples and otherwise are illustrative only and should not be interpreted as limiting. The present invention includes the description, the examples and the embodiments disclosed; but it is not limited to such description, examples or embodiments. Modifications and other embodiments will be apparent to those skilled in the art, and all such modifications and other embodiments are intended and deemed to be within the scope of the present invention as defined by the claims.

## Claims

1. A chlorine-free packaging sheet comprising a first rigid component, a second rigid component and a multilayer film, wherein the multilayer film is positioned between the first rigid component and the second rigid component,
wherein the packaging sheet has a normalized combined tear initiation and propagation resistance in both the machine direction and the transverse direction of less than about 0.115 in*Ibf / mil energy to break and less than about 0.800 % / mil elongation as measured in accordance with ASTM D1004, and
wherein the packaging sheet has a normalized tear propagation resistance in both the machine direction and the transverse direction of less than about 0.300 in*Ibf / mil energy to break and less than about 0.145 Ibf / mil peak load as measured in accordance with ASTM D1938.

2. A packaging sheet according to claim 1, wherein both the first rigid component and the second rigid component comprise styrenic polymer; aromatic polyester; aliphatic polyester; polypropylene homopolymer; high impact polystyrene; amorphous polyethylene terephthalate; glycol-modified polyethylene terephthalate; a blend of general purpose polystyrene and styrene butadiene copolymer; a blend of high impact polystyrene and general purpose polystyrene; a blend of high impact polystyrene, general purpose polystyrene and styrene butadiene copolymer; a blend of amorphous polyethylene terephthalate and styrene butadiene copolymer; or blends thereof.

3. A packaging sheet according to claim 1 or 2, wherein the multilayer film comprises a blown, coextruded film.

4. A packaging sheet according to any preceding claim, wherein the multilayer film comprises
(a) an outer layer,
(b) a barrier component, and
(c) an inner layer,
wherein the barrier component is positioned between the outer layer and the inner layer.

5. A packaging sheet according to claim 4, wherein the outer layer comprises styrenic copolymer, tie material, polyester anchor coat material, copolymer of ethylene and an ester, copolymer of ethylene and at least one alpha olefin, polypropylene copolymer, or styrene butadiene copolymer.

6. A packaging sheet according to claim 4 or 5, wherein the barrier component comprises a barrier layer comprising high density polyethylene, low density polyethylene, copolymer of ethylene and at least one alpha-olefin, or blends thereof, and, optionally, tie material, nucleating agent, hydrocarbon resin, or blends thereof.

7. A packaging sheet according to any of claims 4 to 6, wherein the barrier component comprises a first barrier layer and a second barrier layer and wherein the first barrier layer is positioned between the outer layer and the second barrier layer.

8. A packaging sheet according to claim 7, wherein both the first barrier layer and the second barrier layer comprise high density polyethylene, low density polyethylene, copolymer of ethylene and at least one alpha-olefin, or blends thereof, and, optionally, the first barrier layer further comprises tie material, nucleating agent, hydrocarbon resin, or blends thereof.

9. A packaging sheet according to claim 4, wherein the barrier component comprises
(a) a first barrier component layer,
(b) a first intermediate layer,
(c) an oxygen barrier layer,
(d) a second intermediate layer, and
(e) a moisture barrier layer;
wherein the first intermediate layer is positioned between the first barrier component layer and the oxygen barrier layer, wherein the oxygen barrier layer is positioned between the first intermediate layer and the second intermediate layer and wherein the second intermediate layer is positioned between the oxygen barrier layer and the moisture barrier layer.

10. A packaging sheet according to claim 9, wherein the first barrier component layer comprises high density polyethylene, low density polyethylene, copolymer of ethylene and at least one alpha-olefin, or blends thereof, and, optionally, tie material, nucleating agent, hydrocarbon resin, or blends thereof.

11. A packaging sheet according to claim 9, wherein the first barrier component layer comprises a copolymer of ethylene and an ester, preferably ethylene vinyl acetate copolymer.

12. A packaging sheet according to claim 9, wherein
the first intermediate layer comprises tie material or polyamide; and/or
the oxygen barrier layer comprises a chlorine-free oxygen barrier material, preferably ethylene vinyl alcohol copolymer, polyamide, polyglycolic acid or acrylonitrile-methyl acrylate copolymer; and/or
the second intermediate layer comprises tie material or polyamide; and/or
the moisture barrier layer comprises high density polyethylene, low density polyethylene, copolymer of ethylene and at least one alpha-olefin, or blends thereof, and, optionally, tie material, nucleating agent, hydrocarbon resin, or blends thereof.

13. A packaging sheet according to any of claims 4 to 12, wherein the inner layer comprises high density polyethylene, low density polyethylene, copolymers of ethylene and at least one alpha-olefin, copolymers of ethylene and an ester, anhydride-modified copolymers of ethylene, copolymers of ethylene and a carboxylic acid, ionomers, styrenic copolymers, pressure sensitive adhesives, polypropylene copolymers or blends thereof.

14. A packaging sheet according to any of claims 4 to 12, wherein the inner layer comprises ethylene vinyl acetate copolymer, or a blend of copolymers of ethylene and an ester and copolymers of ethylene and at least one alpha-olefin, or a blend of ethylene vinyl acetate copolymer and linear low density polyethylene.

15. A packaging sheet according to any preceding claim, wherein the multilayer film comprises an n-layer blown, coextruded tubular extrudate that is collapsed and flattened upon itself to form two inner tubular extrudate layers and thermally laminated to itself at the two inner tubular extrudate layers whereby the two inner tubular extrudate layers form one inner layer and a palindromic, 2n-1 layer film results.

16. A packaging sheet according to any preceding claim, wherein
the multilayer film comprises an oxygen barrier material and the packaging sheet has a normalized oxygen transmission rate of less than about 0.1 cc-mil/100 in²/day as measured in accordance with ASTM D3985; and/or
the multilayer film comprises a moisture barrier material and the packaging sheet has a normalized water vapor transmission rate of less than about 0.15 g-mil/100 in²/day as measured in accordance with ASTM F1249.

17. A package for a product wherein the package comprises the packaging sheet according to any preceding claim, the packaging sheet preferably being thermoformed, more preferably into a cup, a tub, a bucket or a tray.

18. A package according to claim 17, wherein the product comprises syrup, cream, cheese, condiments, personal care item, medication, liquid detergent, oil, pate, pet food, glue, beverage or confections.

19. A chlorine-free packaging sheet according to any of claims 1 to 3, wherein:
(a) the first rigid component comprises a blend of high impact polystyrene and general purpose polystyrene;
(b) the second rigid component comprises a blend of high impact polystyrene and general purpose polystyrene; and
(c) the multilayer film is a barrier film positioned between the first rigid component and the second rigid component and comprises (1) a first layer comprising styrene butadiene copolymer, (2) a second layer comprising ethylene vinyl acetate copolymer, (3) a third layer comprising tie material, (4) a fourth layer comprising ethylene vinyl alcohol copolymer, (5) a fifth layer comprising tie material, (6) a sixth layer comprising a blend of high density polyethylene and nucleating agent, and (7) a seventh layer comprising a blend of ethylene vinyl acetate copolymer and linear low density polyethylene.

20. A chlorine-free packaging sheet according to any of claims 1 to 3, wherein:
(a) the first rigid component comprises a blend of high impact polystyrene and general purpose polystyrene;
(b) the second rigid component comprises a blend of high impact polystyrene and general purpose polystyrene; and
(c) the multilayer film is a barrier film positioned between the first rigid component and the second rigid component and comprises (1) a first layer comprising styrene butadiene copolymer, (2) a second layer comprising a blend of high density polyethylene, tie material and nucleating agent, (3) a third layer comprising tie material (4) a fourth layer comprising ethylene vinyl alcohol copolymer, (5) a fifth layer comprising tie material, (6) a sixth layer comprising a blend of high density polyethylene and nucleating agent, and (7) a seventh layer comprising a blend of ethylene vinyl acetate copolymer and linear low density polyethylene.

21. A chlorine-free packaging sheet according to any of claims 1 to 3, wherein:
(a) the first rigid component comprises a blend of high impact polystyrene and general purpose polystyrene;
(b) the second rigid component comprises a blend of high impact polystyrene and general purpose polystyrene; and
(c) the multilayer film is a barrier film positioned between the first rigid component and the second rigid component and the barrier film comprises (1) a first layer comprising styrene butadiene copolymer, (2) a second layer comprising a blend of high density polyethylene, tie material and nucleating agent, (3) a third layer comprising polyamide, (4) a fourth layer comprising ethylene vinyl alcohol copolymer, (5) a fifth layer comprising polyamide, (6) a sixth layer comprising a blend of high density polyethylene, tie material and nucleating agent, and (7) a seventh layer comprising ethylene vinyl acetate copolymer.

22. A packaging sheet according to any of claims 19 to 21, wherein the multilayer barrier film comprises a seven-layer blown, coextruded tubular extrudate that is collapsed and flattened upon itself to form two inner tubular extrudate layers and thermally laminated to itself at the two inner tubular extrudate layers whereby the two inner tubular extrudate layers form the seventh layer and a palindromic, thirteen-layer film results.

23. A packaging sheet according to any of claims 19 to 21, wherein the second layer of the multilayer barrier film further comprises hydrocarbon resin.

24. A packaging sheet according to any of claims 19 to 21, wherein the sixth layer of the multilayer barrier film further comprises hydrocarbon resin.

25. A packaging sheet according to any of claims 19 to 21, wherein the seventh layer of the multilayer barrier film further comprises linear low density polyethylene.

26. A packaging sheet according to any of claims 19 to 25, wherein the packaging sheet has
a normalized oxygen transmission rate of less than about 0.1 cc-mil/100 in²/day as measured in accordance with ASTM D3985, and/or
a normalized water vapor transmission rate of less than about 0.15 g-mil/100 in²/day as measured in accordance with ASTM F1249.

27. A method of manufacturing a chlorine-free packaging sheet comprising the sequential steps of
(a) adding thermoplastic resins to extruders to extrude an outer layer of an n-layer multilayer barrier film, to extrude a barrier component of the multilayer barrier film and to extrude an inner layer of the multilayer barrier film, wherein the barrier component is positioned between the outer layer and the inner layer of the multilayer barrier film and wherein the multilayer barrier film has a first surface and an opposing second surface;
(b) heating the thermoplastic resins to form streams of melt-plastified polymers;
(c) forcing the streams of melt-plastified polymers through a die having a central orifice to form a tubular extrudate having a diameter and a hollow interior;
(d) expanding the diameter of the tubular extrudate by a volume of fluid entering the hollow interior via the central orifice;
(e) collapsing the tubular extrudate;
(f) flattening the tubular extrudate to form two inner tubular extrudate layers;
(g) attaching a first rigid component to the first surface of the multilayer barrier film; and
(h) attaching a second rigid component to the opposing second surface of the multilayer barrier film;
wherein the packaging sheet has a normalized combined tear initiation and propagation resistance in both the machine direction and the transverse direction of less than about 0.115 in*Ibf / mil energy to break and less than about 0.800 % / mil elongation as measured in accordance with ASTM D1004, and
wherein the packaging sheet has a normalized tear propagation resistance in both the machine direction and the transverse direction of less than about 0.300 in*Ibf / mil energy to break and less than about 0.145 Ibf / mil peak load as measured in accordance with ASTM D1938.

28. A method according to claim 27, wherein the outer layer comprises styrenic copolymer, tie material, polyester anchor coat material, copolymer of ethylene and an ester, copolymer of ethylene and at least one alpha olefin, polypropylene copolymer, or styrene butadiene copolymer.

29. A method according to claim 27 or 28, wherein the barrier component comprises a barrier layer comprising high density polyethylene, low density polyethylene, copolymer of ethylene and at least one alpha-olefin, or blends thereof, and, optionally, tie material, nucleating agent, hydrocarbon resin, or blends thereof.

30. A method according to claim 27 or 28, wherein the barrier component comprises a first barrier layer and a second barrier layer and wherein the first barrier layer is positioned between the outer layer and the second barrier layer, both the first barrier layer and the second barrier layer preferably comprising high density polyethylene, low density polyethylene, copolymer of ethylene and at least one alpha-olefin, or blends thereof.

31. A method according to claim 30, wherein the first barrier layer further comprises tie material, nucleating agent, hydrocarbon resin, or blends thereof.

32. A method according to claim 27 or 28, wherein the barrier component comprises
(a) a first barrier component layer,
(b) a first intermediate layer,
(c) an oxygen barrier layer,
(d) a second intermediate layer, and
(e) a moisture barrier layer;
wherein the first intermediate layer is positioned between the first barrier component layer and the oxygen barrier layer, wherein the oxygen barrier layer is positioned between the first intermediate layer and the second intermediate layer and wherein the second intermediate layer is positioned between the oxygen barrier layer and the moisture barrier layer.

33. A method according to claim 32, wherein the first barrier component layer comprises high density polyethylene, low density polyethylene, copolymer of ethylene and at least one alpha-olefin, or blends thereof, and, optionally, tie material, nucleating agent, hydrocarbon resin, or blends thereof.

34. A method according to claim 32, wherein the first barrier component layer comprises a copolymer of ethylene and an ester, preferably vinyl acetate copolymer.

35. A method according to claim 32, wherein the first intermediate layer comprises tie material or polyamide; and/or
the oxygen barrier layer comprises a chlorine-free oxygen barrier material, preferably ethylene vinyl alcohol copolymer, polyamide, polyglycolic acid or acrylonitrile-methyl acrylate copolymer; and/or
the second intermediate layer comprises tie material or polyamide; and/or
the moisture barrier layer comprises high density polyethylene, low density polyethylene, copolymer of ethylene and at least one alpha-olefin, or blends thereof and, optionally, tie material, nucleating agent, hydrocarbon resin, or blends thereof.

36. A method according to any of claims 27 to 35, wherein the inner layer comprises high density polyethylene, low density polyethylene, copolymers of ethylene and at least one alpha-olefin, copolymers of ethylene and an ester, anhydride-modified copolymers of ethylene, copolymers of ethylene and a carboxylic acid, ionomers, styrenic copolymers, pressure sensitive adhesives, polypropylene copolymers or blends thereof.

37. A method according to any of claims 27 to 35, wherein the inner layer comprises ethylene vinyl acetate copolymer, or a blend of copolymers of ethylene and an ester and copolymers of ethylene and at least one alpha-olefin, or a blend of ethylene vinyl acetate copolymer and linear low density polyethylene.

38. A method according to any of claims 27 to 37, wherein flattening the tubular extrudate further comprises thermally laminating the two inner tubular extrudate layers to themselves whereby the two inner tubular extrude layers form one inner layer and a palindromic, 2n-1 layer film results.

39. A method according to claim 38, wherein the first rigid component is attached to the first surface by thermal lamination, by adhesive lamination, by extrusion lamination or by extrusion coating and the second rigid component is attached to the opposing second surface by thermal lamination, by adhesive lamination, by extrusion lamination or by extrusion coating.

40. A method according to any of claims 27 to 39, wherein both the first rigid component and the second rigid component comprise styrenic polymer; aromatic polyester; aliphatic polyester; polypropylene homopolymer; high impact polystyrene; amorphous polyethylene terephthalate; glycol-modified polyethylene terephthalate; a blend of general purpose polystyrene and styrene butadiene copolymer; a blend of high impact polystyrene and general purpose polystyrene; a blend of high impact polystyrene, general purpose polystyrene and styrene butadiene copolymer; a blend of amorphous polyethylene terephthalate and styrene butadiene copolymer; or blends thereof.

41. A method according to any of claims 27 to 40, wherein
the multilayer barrier film comprises an oxygen barrier material and the packaging sheet has a normalized oxygen transmission rate of less than about 0.1 cc-mil/100 in²/day as measured in accordance with ASTM D3985; and/or
the multilayer barrier film comprises a moisture barrier material and the packaging sheet has a normalized water vapor transmission rate of less than about 0.15 g-mil/100 in²/day as measured in accordance with ASTM F1249.
